# EUROPÄISCHE PATENTSCHRIFT

(11) **EP 2 647 904 B1**
(45) Veröffentlichungstag und Bekanntmachung des Hinweises auf die Patenterteilung: **10.05.2017**
(21) Anmeldenummer: 13158383.3
(22) Anmeldetag: 08.03.2013
(51) Int. Cl.: F21V 5/02, G02B 5/04, F21S 8/00

(54) **Prismenplatte mit variierenden Flankenwinkeln**
Prism plate with varying flank angles
Plaque prismatique dotée d'angles de flanc variables

(30) Priorität: 05.04.2012 DE 102012102986
(43) Veröffentlichungstag der Anmeldung: 09.10.2013
(73) Patentinhaber: Siteco Beleuchtungstechnik GmbH, 83301 Traunreut (DE)
(72) Erfinder: Lewers, Christoph, 59821 Arnsberg (DE)
(74) Vertreter: Schmidt, Steffen

(56) Entgegenhaltungen:
- WO-A1-2007/055115
- WO-A1-2011/107479
- DE-B- 1 201 787
- JP-A- H06 308 485
- US-A- 3 001 062
- US-A- 3 532 876
- US-A1- 2002 071 272

## Beschreibung

Die vorliegende Erfindung betrifft eine transparente Abdeckung für eine Leuchte, insbesondere für eine Leuchte für Beleuchtungszwecke, sowie eine Leuchte mit einer derartigen Abdeckung. Die Abdeckung weist auf einer Grundfläche zumindest einen Oberflächenbereich mit einer Oberflächenstruktur auf.

Aus der GB 878 215 ist eine Streuplatte bekannt, die auf einer ihrer Oberflächen mehrere Rücksprünge aufweist, deren Seitenwände geneigt sind. Die Rücksprünge können konisch oder pyramidenförmig sein. Die Rücksprünge sind dabei in einem gleichmäßigen Muster auf der Platte angeordnet.

Aus der DE 25 20 429 ist ferner eine Leuchtenabdeckung bekannt, die auf ihrer Außenseite zwei sich schneidende Scharen von parallelen Hauptnuten mit gleichem Abstand und V-förmigen Querschnitt aufweist, die eine Vielzahl von gleichseitigen Vierecken begrenzen und ihrerseits von parallelen, äquidistanten Nebennuten mit kleinerem Abstand als die Hauptnuten durchschnitten sind, wobei die Seitenflächen benachbarter Nuten die Seiten pyramidenförmiger Erhebungen bilden.

Aus der DE 19 20 071 ist ferner eine transparente Abdeckung für eine Leuchte bekannt, an deren Oberfläche Prismenkörper gebildet sind. Die Firste und die Seitenflächen sämtlicher Prismenkörper sind durch im Querschnitt V-förmige Längsrillen und die die Prismenkörper stirnseitig begrenzenden Flächen durch weitere parallele, im Querschnitt ebenfalls V-förmige, sich mit den Längsrillen kreuzende Rillen gebildet.

Ferner ist aus der DE 1 201 781 eine lichtdurchlässige Platte bekannt, deren Oberfläche zumindest zum Teil durch lückenloses Aneinanderreihen von Polyedern entsteht. Jeder Polyeder weist eine Pyramide gleicher Seitenzahl auf. Die Pyramidenflächen weisen dabei die gleiche Neigung auf.

Darüber hinaus ist aus der US 3 163 367 eine transparente Platte bekannt, deren eine Oberfläche mit einem Muster aus pyramidenstumpfförmigen Vertiefungen versehen ist. In den Vertiefungen befindet sich jeweils ein Paar gekreuzter Prismen, deren Firste in Richtung der Grundfläche der pyramidenförmigen Vertiefungen ausgerichtet sind. Die Prismen sind symmetrisch unter rechten Winkeln angeordnet.

Aus der EP 1 843 084 A1 ist eine Leuchte mit einer Abdeckung bekannt. Die Abdeckung weist eine primäre und eine sekundäre Lichtaustrittsfläche auf. Die sekundäre Lichtaustrittsfläche verläuft im montierten Zustand der Leuchte vertikal und weist auf ihrer Innenseite horizontal verlaufende Dreiecksprismen auf, um das Licht in Richtung Decke abzulenken.

WO 2011/107479 A1 offenbart eine Leuchte mit Lichtausrichtungselementen, die in Form von Kegelelementen mit sich ändernden Neigungswinkeln auf der Vorderseite einer Grundplatte angeordnet sind.

US 2002/0071272 A1 offenbart eine Beleuchtungsvorrichtung, welche für Kameras geeignet ist, und eine Entladungsröhre sowie optische Elemente in Form von Prismenelementen mit sich änderndem Scheitelwinkel aufweist.

JP H06 308485 A offenbart eine Anzeigevorrichtung mit einer integrierten Prismenplatte, wobei nach einer Ausführungsform die Prismen innerhalb der Platte unterschiedliche Größen aufweisen.

US 3 001 062 A offenbart ein lichtbrechendes Element für eine Leuchte, wobei das lichtbrechende Element eine Anordnung von Prismen aufweist, die sich in drei Teilbereiche unterscheiden lassen.

US 3 532 876 A offenbart eine Leuchte mit wenigstens einer röhrenförmigen Lampe und einer lichtdurchlässigen Abdeckung mit einer prismatischen Oberflächen. Die Prismen können unterschiedliche Scheitelwinkel innerhalb der Platte annehmen.

WO 2007/055115 A1 offenbart eine Backlight-Vorrichtung, welche eine Lichtdiffusionsplatte mit Prismenelementen aufweist. Die Prismenelemente weisen unterschiedliche Formen oberhalb der Lampen und in den Bereichen zwischen den Lampen auf.

DE 12 01 787 B offenbart eine lichtdurchlässige Platte zur Streuung von Licht durch ein geprägtes Muster auf einer Oberfläche der Platte.

EP 0 496 921 A1 offenbart eine Langfeldleuchte mit einer Abdeckung, welche auf der Innenseite Prismenelemente unterschiedlicher Form aufweist.

Aufgabe der vorliegenden Erfindung ist es, eine transparente Abdeckung bereitzustellen, die eine verbesserte Entblendung und Anpassung der Lichtverteilungskurve insbesondere bei Leuchten ermöglicht, bei denen Licht nicht gleichmäßig über die gesamte Fläche der Abdeckung eingekoppelt wird. Insbesondere ermöglicht die vorliegende Erfindung eine Einstellung der Lichtverteilungskurve unter Berücksichtigung der Positionierung von Lampen der Leuchte, beispielsweise einer oder mehrerer Flächenlichtquellen, Leuchtstoffröhren, LED, OLED etc.

Diese Aufgabe wird erfindungsgemäß durch eine transparente Abdeckung gemäß Anspruch 1 oder 5 sowie durch eine Leuchte gemäß Anspruch 12 gelöst.

Die Erfindung stellt eine transparente Abdeckung für eine Leuchte bereit, wobei die transparente Abdeckung auf einer Grundfläche zumindest einen Oberflächenbereich mit einer Oberflächenstruktur aufweist, welche durch zumindest eine erste Schar von jeweils einer Basislinie folgenden Strukturelementen definiert ist. Jedes Strukturelement der ersten Schar weist in einem Querschnitt senkrecht zu der Basislinie einen ersten Flankenschenkel auf, welcher einen Neigungswinkel mit der Grundfläche einschließt. Der Oberflächenbereich weist zumindest einen ersten Teilbereich, einen dritten Teilbereich sowie einen zwischen dem ersten und dritten Teilbereich befindlichen zweiten Teilbereich auf, wobei der Neigungswinkel der ersten Flankenschenkel der Strukturelemente der ersten Schar in dem ersten Teilbereich und in dem dritten Teilbereich in einem ersten Neigungswinkelbereich liegt, und wobei der Neigungswinkel der ersten Flankenschenkel der Strukturelemente der ersten Schar in dem zweiten Teilbereich in einem zweiten Neigungswinkelbereich liegt. Der erste und der zweite Neigungswinkelbereich sind voneinander getrennt. Der erste und der zweite Teilbereich sind benachbart oder durch einen Strukturelemente der ersten Schar aufweisenden ersten Übergangsbereich verbunden, wobei der zweite und der dritte Teilbereich ebenfalls benachbart sind oder durch einen Strukturelemente der ersten Schar aufweisenden zweiten Übergangsbereich verbunden sind.

Die Erfindung stellt somit eine transparente Abdeckung bereit, welche Strukturelemente umfasst, die einen über die Abdeckung variierenden Neigungswinkel der Flankenschenkel relativ zu der Grundfläche aufweisen. Auf diese Weise wird das aus der Abdeckung austretende Licht in unterschiedliche Raumrichtungen gebrochen. Dabei kann insbesondere vorgesehen sein, dass die Flankenschenkel der Strukturelemente in Bereichen der transparenten Abdeckung, hinter welchen sich ein Leuchtmittel der Leuchte befindet, einen anderen Neigungswinkel haben als in Bereichen, hinter denen sich kein Leuchtmittel befindet. Auf diese Weise kann eine gleichmäßig hell erscheinende Fläche erreicht werden und gezielt eine gewünschte Lichtverteilungskurve eingestellt werden. Ein Leuchtmittel der Leuchte kann über einem mittleren Bereich der Abdeckung angeordnet sein. Alternativ oder zusätzlich kann ein Leuchtmittel der Leuchte über einem Rand der Abdeckung angeordnet sein. Insbesondere können mehrere Leuchtmittel jeweils im Bereich von Rändern, insbesondere im Bereich gegenüberliegender Ränder der Abdeckung angeordnet sein. Das Leuchtmittel kann in Richtung der transparenten Abdeckung durch eine lichtundurchlässig Struktur zumindest teilweise abgedeckt sein, so dass von dem Leuchtmittel ausgestrahltes Licht nicht direkt auf die transparente Abdeckung trifft. Die Leuchte kann eine lichtlenkende Struktur, insbesondere einen Reflektor aufweisen, um Licht des Leuchtmittels in Richtung der transparenten Abdeckung zu lenken.

Der zweite Teilbereich kann näher an einem Leuchtmittel der Leuchte angeordnet sein als der erste und/oder dritte Teilbereich. Alternativ kann der zweite Teilbereich weiter von einem Leuchtmittel der Leuchte entfernt angeordnet sein als der erste und/oder dritte Teilbereich. Der Neigungswinkel der Flankenschenkel kann in diesen Ausführungsformen im zweiten Teilbereich kleiner oder größer als in dem ersten und dem dritten Teilbereich sein.

Die Abdeckung kann z.B. als Platte oder wannenförmig ausgebildet sein. Die transparente Abdeckung kann aus Kunststoff, insbesondere aus Polymethylmethacrylat (PMMA) gefertigt sein. Die Abdeckung kann starr oder biegsam, z.B. als Folie ausgebildet sein. Die Grundfläche kann eine Fläche sein, entlang welcher sich die transparente Abdeckung zumindest abschnittsweise erstreckt. Die Grundfläche und/oder die transparente Abdeckung kann in einem Abschnitt, welcher in einer Lichtaustrittfläche der Leuchte angeordnet ist, eben verlaufen. In einigen Ausführungsformen verläuft die gesamte Grundfläche und/oder die gesamte Abdeckung eben.

Die Strukturelemente können als Vorsprünge und/oder als Rücksprünge ausgebildet sein. Die Flankenschenkel können gerade oder gekrümmt verlaufen. Bei einem gekrümmten Flankenschenkel kann der Neigungswinkel insbesondere ein Neigungswinkel der Sekante des Flankenschenkels relativ zu der Grundfläche sein. Der Querschnitt kann insbesondere durch den höchsten bzw. tiefsten Punkt des jeweiligen Strukturelements verlaufen, wenn die Strukturelemente als Vorsprünge oder als Rücksprünge ausgebildet sind. Der Querschnitt kann senkrecht zu der Grundfläche verlaufen.

Der erste, der zweite und der dritte Teilbereich weisen Strukturelemente der ersten Schar auf. Insbesondere können der erste, der zweite und der dritte Teilbereich jeweils mehrere Strukturelemente der ersten Schar aufweisen. Strukturelemente der ersten Schar können vollständig in einem der Teilbereiche liegen oder sich zumindest teilweise durch einen oder mehrere der Teilbereiche erstrecken. Der Oberflächenbereich, der erste, zweite, dritte Teilbereich, der erste und/oder zweite Übergangsbereich können jeweils einfach zusammenhängende Bereiche sein.

Der erste Neigungswinkelbereich kann höher oder niedriger als der zweite Neigungswinkelbereich liegt. Es ist dabei bevorzugt, dass der zweite Neigungswinkelbereich niedriger als der erste Neigungswinkelbereich liegt, d.h. dass die Flankenschenkel im zweiten Teilbereich flacher verlaufen als in dem ersten und dritten Teilbereich. Dies ist insbesondere dann bevorzugt, wenn sich hinter dem zweiten Teilbereich ein Leuchtmittel der Leuchte befindet.

Der erste oder zweite Neigungswinkelbereich kann 5° bis 33,5° und der zweite bzw. erste Neigungswinkelbereich 33,6° bis 89° betragen. In einigen Ausführungsformen kann der erste oder zweite Neigungswinkelbereich 15° bis 33,5° und der zweite bzw. erste Neigungswinkelbereich 33,6° bis 75° betragen. Bevorzugt kann der erste oder zweite Neigungswinkelbereich 28° bis 33,5° und der zweite bzw. erste Neigungswinkelbereich 33,6° bis 60° betragen.

Anders als beispielsweise eine Fresnellinse erlaubt die transparente Abdeckung gemäß der Erfindung die Einstellung einer gewünschten Lichtverteilungskurve zu Beleuchtungszwecken.

In einer bevorzugten Ausführungsform weisen zumindest einige, insbesondere jedes Strukturelement der ersten Schar in dem Querschnitt senkrecht zu der Basislinie ferner einen zweiten Flankenschenkel auf, wobei der erste und der zweite Flankenschenkel einen Flankenwinkel einschließen, wobei der Flankenwinkel und/oder eine Neigung einer Winkelhalbierenden des Flankenwinkels gegenüber einer Flächennormalen der Grundfläche in dem ersten und dritten Teilbereich und in dem zweiten Teilbereich unterschiedlich ist. Durch die Variation des Flankenwinkels oder seiner Winkelhalbierenden kann auf einfache Weise die Neigung der Flankenschenkel variiert werden, um eine gewünschte Lichtverteilung einzustellen.

In einigen Ausführungsformen kann vorgesehen sein, dass die Winkelhalbierenden der Flankenwinkel der Strukturelemente mit einer gleichen Neigung, insbesondere senkrecht zur Grundfläche verlaufen. Dies erleichtert die Fertigung der Abdeckung.

Es ist bevorzugt, dass der Flankenwinkel in dem ersten Teilbereich und in dem dritten Teilbereich in einem ersten Flankenwinkelbereich liegt, wobei der Flankenwinkel in dem zweiten Teilbereich in einem zweiten Flankenwinkelbereich liegt, wobei der erste und der zweite Flankenwinkelbereich voneinander getrennt sind.

Der erste oder zweite Flankenwinkelbereich kann z.B. 90° bis 113°, insbesondere 100° bis 113°, bevorzugt 105° bis 112° betragen. Der zweite bzw. erste Flankenwinkelbereich kann 114° bis 140°, insbesondere 114° bis 130°, bevorzugt 115° bis 125° betragen.

Es ist bevorzugt, dass der zweite Flankenschenkel einen Neigungswinkel mit der Grundfläche einschließt, wobei der Neigungswinkel der zweiten Flankenschenkel der Strukturelemente der ersten Schar in dem ersten Teilbereich und in dem dritten Teilbereich in dem ersten oder dem zweiten Neigungswinkelbereich liegt, wobei der Neigungswinkel der zweiten Flankenschenkel der Strukturelemente der ersten Schar in dem zweiten Teilbereich in dem zweiten bzw. dem ersten Neigungswinkelbereich liegt. Hierdurch wird auch die Neigung der zweiten Flankenschenkel über der Abdeckung variiert, so dass auch die zweiten Flankenschenkel zur Einstellung einer gewünschten Lichtverteilungskurve genutzt werden können.

In einigen Ausführungsformen ist der Neigungswinkel der ersten und/oder zweiten Flankenschenkel größer als 10°, insbesondere größer als 20° und bevorzugt größer als 25°. Alternativ oder zusätzlich kann der Neigungswinkel der der ersten und/oder zweiten Flankenschenkel kleiner als 80°, insbesondere kleiner als 70° und bevorzugt kleiner als 65° sein.

In einer bevorzugten Ausführungsform verlaufen die Basislinien der Strukturelemente der ersten Schar parallel zueinander. Dies ermöglicht eine gleichmäßigere Ausrichtung der Flankenflächen der Strukturelemente, so dass über den Oberflächenbereich ein gewünschter Entblendungseffekt eingestellt werden kann. Ferner ist die Abdeckung hierdurch einfacher zu fertigen.

Die Basislinien können gerade verlaufen. Ein gerader Verlauf der Basislinien ist für den Betrachter in der Regel weniger auffällig als beispielsweise ein wellenförmiger Verlauf der Basislinien, welcher erfindungsgemäß ebenfalls möglich ist, z.B. um eine gewünschte Lichtverteilungskurve einzustellen.

In einer bevorzugten Ausführungsform sind die Strukturelemente der ersten Schar gleichmäßig, insbesondere in Reihen, bevorzugt in periodischen Reihen angeordnet. Dies ermöglicht eine gleichmäßige Auskopplung des austretenden Lichts. Die Reihen können insbesondere äquidistant angeordnet sein. Benachbarte Strukturelemente der ersten Schar können jeweils einen gleichen Abstand zueinander aufweisen.

Gemäß einer bevorzugten Ausführungsform berühren der erste und der zweite Flankenschenkel jedes Strukturelements der ersten Schar einander. Hierdurch wird ein Zwischenbereich zwischen den Flankenschenkeln vermieden. Es kann vorgesehen sein, dass der Oberflächenbereich keine Abschnitte aufweist, welche parallel zu der Grundfläche verlaufen. In diesen Ausführungsformen sind alle Abschnitte gegenüber der Grundfläche der transparenten Abdeckung geneigt und tragen somit zur blendungsfreien Auskopplung des austretenden Lichts bei. Es kann allerdings auch ein Zwischenbereich zwischen den Flankenschenkeln vorgesehen sein. Dies ist z.B. vorteilhaft, um Licht aus einem Teilbereich der Abdeckung in eine Vielzahl Raumrichtungen auszukoppeln und auf diese Weise die Lichtverteilungskurve einzustellen.

Der Flankenwinkel der Strukturelemente und/oder der Neigungswinkel der Flankenschenkel kann dadurch unterschiedlich sein, dass die Höhen und/oder Breiten der Strukturelemente unterschiedlich sind und/oder entlang ihrer Basislinie variieren.

Gemäß einer bevorzugten Ausführungsform variiert der Neigungswinkel der ersten und/oder zweiten Flankenschenkel zumindest einiger, insbesondere aller Strukturelemente der ersten Schar entlang der Basislinie. Dies ist insbesondere dann bevorzugt, wenn sich die Strukturelemente durch zumindest den ersten und den zweiten Teilbereich und/oder den zweiten und den dritten Teilbereich erstrecken. In diesen Ausführungsformen kann die gewünschte Ausrichtung der Flankenseiten mit Hilfe eines einzigen Typs von Strukturelementen durchgeführt werden. Der Neigungswinkel kann dadurch entlang ihrer Basislinie variieren, dass die Höhen und/oder Breiten der Strukturelemente entlang ihrer Basislinie variieren. In einigen Ausführungsformen variiert der Flankenwinkel zumindest einiger Strukturelemente der ersten Schar entlang der Basislinie.

Gemäß einer bevorzugten Ausführungsform ist der Neigungswinkel der ersten und/oder zweiten Flankenschenkel der Strukturelemente der ersten Schar in dem ersten, zweiten und/oder dritten Teilbereich konstant. Der Neigungswinkel der Strukturelemente der ersten Schar kann in dem ersten und/oder dritten Teilbereich z.B. etwa 35° und/oder in dem zweiten Teilbereich etwa 32° betragen.

In einer bevorzugten Ausführungsform liegt der Neigungswinkel der ersten und/oder zweiten Flankenschenkel der Strukturelemente der ersten Schar in dem ersten und/oder zweiten Übergangsbereich zumindest abschnittsweise zwischen dem ersten und dem zweiten Neigungswinkelbereich. Dabei kann sich insbesondere der Neigungswinkel über benachbarte Strukturelemente der ersten Schar monoton, bevorzugt streng monoton ändern. Dies ermöglicht einen fließenden Übergang zwischen den Teilbereichen. Auf diese Weise kann die Lichtverteilungskurve gezielt beeinflusst werden und beispielsweise eine gleichmäßig hell erscheinende Lichtaustrittsfläche erreicht werden.

In einer bevorzugten Ausführungsform alterniert der Neigungswinkel der ersten und/oder zweiten Flankenschenkel der Strukturelemente der ersten Schar in dem ersten und/oder zweiten Übergangsbereich zumindest abschnittsweise zwischen einem Wert aus dem ersten Neigungswinkelbereich und einem Wert aus dem zweiten Neigungswinkelbereich. Auf diese Weise kann die gewünschte Lichtverteilungskurve mit nur wenigen verschiedenen Strukturelementen erzeugt werden. Dies erleichtert die Fertigung der transparenten Abdeckung. Bevorzugt ist dies insbesondere in Ausführungsformen, in welchen der Neigungswinkel innerhalb des ersten, zweiten und/oder dritten Teilbereichs konstant ist.

Besonders bevorzugt ist, dass der erste und/oder zweite Übergangsbereich mehrere erste Zonen, in welchen der Neigungswinkel der ersten und/oder zweiten Flankenschenkel der Strukturelemente der ersten Schar in dem ersten Neigungswinkelbereich liegt, und mehrere zweite Zonen, in welchen der Neigungswinkel der ersten und/oder zweiten Flankenschenkel der Strukturelemente der ersten Schar in dem zweiten Neigungswinkelbereich liegt, umfasst. Dabei kann insbesondere eine der zweiten Zonen, die näher an dem zweiten Teilbereich angeordnet ist, breiter sein als zumindest eine, bevorzugt jede der zweiten Zonen, die von dem zweiten Teilbereich weiter entfernt angeordnet ist. Dies ermöglicht einen unauffälligeren Übergang zwischen den Teilbereichen. In einigen Ausführungsformen können die ersten und zweiten Zonen in dem ersten und/oder zweiten Übergangsbereich alternieren. Die ersten und/oder zweiten Zonen können parallel zu dem zweiten Teilbereich verlaufen. In einigen Ausführungsformen sind die Breiten der ersten und/oder zweiten Zonen jeweils ein ganzzahliges Vielfaches eines Breitenmaßes. Eine Breite der ersten und zweiten Zonen kann zwischen 1% und 20%, insbesondere zwischen 2% und 18% und bevorzugt zwischen 3% und 14% einer Breite des ersten bzw. zweiten Übergangsbereichs betragen. Hierdurch treten die einzelnen Zonen stärker in den Hintergrund und sind unauffälliger.

Zumindest einer, bevorzugt jeder der Teilbereiche und Übergangsbereiche kann streifenförmig verlaufen. Dies ist insbesondere im Zusammenhang mit der Verwendung eines Leuchtmittels mit Längsachse vorteilhaft. Der erste und/oder zweite Übergangsbereich kann eine Breite aufweisen, welche zwischen 1% und 50%, insbesondere zwischen 3% und 40% und bevorzugt zwischen 5% und 30% einer Breite des zweiten Teilbereichs beträgt.

Der erste und der dritte Teilbereich können voneinander getrennt, benachbart oder miteinander verbunden sein. Insbesondere können der erste und der dritte Teilbereich den zweiten Teilbereich umgeben, wobei der erste und dritte Teilbereich den zweiten Teilbereich bevorzugt vollständig umgeben.

In einer bevorzugten Ausführungsform weist die Oberflächenstruktur ferner zumindest eine zweite Schar von Strukturelementen auf, wobei die Strukturelemente der zweiten Schar insbesondere jeweils einer Basislinie folgen und die Basislinien der Strukturelemente der zweiten Schar bevorzugt parallel zueinander verlaufen. Die Strukturelemente der zweiten Schar können im Querschnitt zwei einen Flankenwinkel einschließende Flankenschenkel aufweisen.

Besonders bevorzugt schließen die Basislinien der Strukturelemente der zweiten Schar einen Winkel mit den Basislinien der Strukturelemente der ersten Schar ein. Der Schnittwinkel der Basislinien der Strukturelemente der ersten und zweiten Schar kann insbesondere 30°, 45°, 60° oder 90° betragen. Auf diese Weise ergibt sich eine gleichmäßige Anordnung der Strukturelemente. Einige oder alle Strukturelemente der zweiten Schar können jeweils einen entlang ihrer Basislinie variierenden Flankenwinkel aufweisen.

In einer besonders bevorzugten Ausführungsform weist die Oberflächenstruktur ferner eine dritte Schar von Strukturelementen auf, wobei die Strukturelemente der dritten Schar insbesondere jeweils einer Basislinie folgen und die Basislinien der Strukturelemente der dritten Schar bevorzugt parallel zueinander verlaufen. Die Strukturelemente der dritten Schar können im Querschnitt zwei einen Flankenwinkel einschließende Flankenschenkel aufweisen. Einige oder alle Strukturelemente der dritten Schar können jeweils einen entlang ihrer Basislinie variierenden Flankenwinkel aufweisen. Besonders bevorzugt schneiden sich die Basislinien der Strukturelemente der ersten, zweiten und dritten Schar in jeweils einem Winkel.

Einige oder alle Strukturelemente der zweiten und/oder dritten Schar können sich über mindestens zwei der Teilbereiche erstrecken. Einige oder alle Strukturelemente der ersten, zweiten und/oder dritten Schar können sich im Wesentlichen über die gesamte transparente Abdeckung erstrecken.

In einer bevorzugten Ausführungsform können die Strukturelemente der ersten Schar jeweils mehrere, insbesondere kegelförmige, kegelstumpfförmige oder prismatische Unterstrukturelemente umfassen. Dies bietet den Vorteil, dass eine Vielzahl von Seitenwandabschnitten mit unterschiedlichen Orientierungen innerhalb jedes Strukturelements vorliegt. Auf diese Weise kann die Entblendung weiter verbessert werden. Bevorzugt sind dabei kegelförmige oder kegelstumpfförmige Unterstrukturelemente, da diese aufgrund der gekrümmten Mantelfläche eine Vielzahl von Flächennormalen aufweisen und somit eine Lichtauskopplung in eine Vielzahl von Raumrichtungen erlauben. Alternativ ist es möglich, dass die mehreren Strukturelemente jeweils einen einzelnen Vorsprung oder Rücksprung aufweisen, der sich insbesondere entlang der Basislinie des Strukturelements erstreckt.

Bei Strukturelementen mit kegelförmigen oder kegelstumpfförmigen Unterstrukturelementen entspricht der Flankenwinkel dem Kegelwinkel des jeweiligen Unterstrukturelements. Der Kegelwinkel ist der Öffnungswinkel der Mantelfläche an der Kegelspitze. In Ausführungsformen mit kegelstumpfförmigen Unterstrukturelementen entspricht der Flankenwinkel dem Kegelwinkel eines Kegels, dessen Mantelfläche sich als Fortsetzung der Mantelfläche des Kegelstumpfes ergibt. Der Neigungswinkel entspricht demgemäß dem zwischen Mantelfläche und Grundfläche eingeschlossenen Winkel.

Bevorzugt ist, dass die Unterstrukturelemente eines Strukturelements gleich sind. Jedes der Strukturelemente der ersten Schar kann mehrere gleichartige oder gleiche Unterstrukturelemente aufweisen. Dies bewirkt eine gleichmäßig erscheinende Fläche und erleichtert ferner die Fertigung der Abdeckung.

Bevorzugt ist ferner, dass die Unterstrukturelemente eines Strukturelements entlang der Basislinie des Strukturelements angeordnet sind. Auch dies erleichtert die Fertigung der Abdeckung.

In einer bevorzugten Ausführungsform sind die Strukturelemente der ersten, zweiten und/oder dritten Schar ausschließlich als Rücksprünge oder Vorsprünge ausgebildet. Hierdurch ergibt sich ein homogener Gesamteindruck der transparenten Abdeckung. Insbesondere wird eine homogenere Entblendung erreicht.

Gemäß einer bevorzugten Ausführungsform sind die Strukturelemente der ersten, zweiten und/oder dritten Schar jeweils entlang ihrer Basislinie translationssymmetrisch. Dies ermöglicht eine einfache Fertigung der Abdeckung.

In einer bevorzugten Ausführungsform weist der Oberflächenbereich darüber hinaus eine alternierende Abfolge weiterer Teilbereiche, in welchen der Neigungswinkel der ersten und/oder zweiten Flankenschenkel der Strukturelemente der ersten Schar in dem ersten Neigungswinkelbereich liegt, und weiterer Teilbereiche, in welchen der Neigungswinkel der ersten und/oder zweiten Flankenschenkel der Strukturelemente der ersten Schar in dem zweiten Neigungswinkelbereich liegt, auf, wobei aufeinanderfolgende weitere Teilbereiche benachbart sind oder durch einen Strukturelemente der ersten Schar aufweisenden Übergangsbereich verbunden sind. In dieser Ausführungsform weist die transparente Abdeckung eine Vielzahl von Teilbereichen auf, wobei benachbarte oder miteinander verbundene Teilbereiche unterschiedliche Neigungswinkel der Flankenschenkel aufweisen. Dies ist insbesondere dann bevorzugt, wenn die transparente Abdeckung bei einer Leuchte mit mehreren Leuchtmitteln eingesetzt wird. Insbesondere kann in dieser Ausführungsform jeweils ein Teilbereich oder ein Übergang zwischen zwei Teilbereichen einem Leuchtmittel zugeordnet sein. Auf diese Weise kann eine gewünschte Lichtverteilungskurve gezielt eingestellt werden.

Ferner stellt die vorliegende Erfindung eine Leuchte, insbesondere eine Leuchte für Beleuchtungszwecke, die als Innenleuchte oder als Außenleuchte ausgebildet sein kann, z.B. eine Wannenleuchte, Einbau- oder Anbauleuchte, Pendelleuchte, Stehleuchte, Decken- oder Wandleuchte mit einer transparenten Abdeckungen der beschriebenen Art bereit. Die Leuchte weist darüber hinaus zumindest ein, insbesondere zwei Leuchtmittel oder Aufnahmemittel für ein Leuchtmittel auf. Das Leuchtmittel kann dabei insbesondere eine Leuchtstoffröhre, eine LED oder eine Gruppe von LED, eine OLED oder eine Gruppe von OLED, ein LED-Modul, ein OLED-Modul und/oder eine Flächenlichtquelle umfassen. Das LED-Modul bzw. OLED-Modul kann ferner insbesondere eine Primärabdeckung und/oder lichtlenkende oder lichtstreuende Strukturen aufweisen. Bevorzugt ist, dass die Leuchte mehrere Leuchtmittel aufweist, welche gleichmäßig angeordnet sind. Dabei kann die Leuchte insbesondere mehrere, jeweils in gleichem Abstand angeordnete Leuchtstoffröhren aufweisen. In einigen Ausführungsformen kann die Leuchte mehrere LED oder Gruppen von LED oder OLED aufweisen, welche in einem gleichmäßigen Muster angeordnet sind.

In einer bevorzugten Ausführungsform definiert das zumindest eine Leuchtmittel eine Längsachse, wobei die Basislinien der Strukturelemente der ersten Schar parallel zu der Längsachse des Leuchtmittels verlaufen. Ein Leuchtmittel, welches eine Längsachse definiert, ist beispielsweise eine Leuchtstoffröhre oder eine Gruppe von LED und/oder OLED. Die Gruppe von LED und/oder OLED kann dabei auf einem separaten Leuchtenmodul angeordnet sein. In dieser Ausführungsform wird insbesondere die Lichtverteilung senkrecht zu der Längsachse beeinflusst, so dass eine gewünschte Lichtverteilungskurve eingestellt werden kann.

In Ausführungsformen, in welchen die Leuchte mehr als ein Leuchtmittel aufweist, können zumindest zwei der Leuchtmittel jeweils eine Längsachse definieren, wobei die Längsachsen der Leuchtmittel insbesondere parallel zueinander verlaufen können.

Die transparente Abdeckung kann zumindest teilweise in einer Lichtaustrittsfläche der Leuchte angeordnet sein, wobei insbesondere der Oberflächenbereich der Abdeckung im Wesentlichen vollständig in der Lichtaustrittsfläche angeordnet sein kann und/oder die gesamte Lichtaustrittsfläche bedecken kann.

Gemäß einer bevorzugten Ausführungsform ist der zweite Teilbereich des Oberflächenbereichs der transparenten Abdeckung näher an dem zumindest einem Leuchtmittel angeordnet als der erste und/oder der dritte Teilbereich. In Ausführungsformen, in welchen die Leuchte beispielsweise als Deckenleuchte ausgebildet ist, beeinflusst der zweite Teilbereich auf diese Weise vor allem das senkrecht nach unten auftreffende Licht, während der erste und dritte Teilbereich vornehmlich dasjenige Licht beeinflussen, welches unter einem größeren Winkel auf die Abdeckung auftrifft. Auf diese Weise können die verschiedenen Teilbereiche getrennt voneinander optimiert werden, um eine gewünschte Lichtverteilungskurve einzustellen.

Es kann vorgesehen sein, dass das zumindest eine, bevorzugt jedes Leuchtmittel hinter einem Teilbereich der transparenten Abdeckung angeordnet ist, in welchem der Neigungswinkel im zweiten Neigungswinkelbereich liegt.

Gemäß einer bevorzugten Ausführungsform erstreckt sich der erste, zweite und/oder dritte Teilbereich entlang einer Längsachse, welche insbesondere parallel zu der Längsachse des zumindest einen Leuchtmittels verläuft. In diesen Ausführungsformen wird die Symmetrie des Leuchtmittels von der transparenten Abdeckung aufgegriffen und es kann eine symmetrische Lichtverteilungskurve eingestellt werden. Insbesondere kann eine Lichtverteilung quer zur Längsachse des Leuchtmittels über die gesamte Länge des Leuchtmittels annähernd gleich sein.

In einigen Ausführungsformen ist der zweite Teilbereich in einem zentralen Bereich der transparenten Abdeckung angeordnet. Der erste und/oder dritte Teilbereich kann an einem Rand der transparenten Abdeckung vorgesehen sein. Das zumindest eine Leuchtmittel kann mittig über der transparenten Abdeckung angeordnet sein. Alternativ oder zusätzlich kann ein Leuchtmittel nahe an einem Rand der transparenten Abdeckung angeordnet sein.

Weitere Merkmale und Vorteile der vorliegenden Erfindung ergeben sich aus der nachfolgenden Beschreibung bevorzugter Ausführungsformen.
- Figur 1: zeigt einen Ausschnitt einer Aufsicht auf eine Lichtaustrittsfläche einer erfindungsgemäßen Leuchte mit zwei Leuchtmitteln.
- Figur 2: zeigt einen vergrößerten Ausschnitt der transparenten Abdeckung gemäß Figur 1 mit einem Übergangsbereich.
- Figur 3: zeigt einen Ausschnitt einer Oberflächenstruktur einer transparenten Abdeckung.
- Figur 4a: zeigt einen Ausschnitt einer transparenten Abdeckung gemäß einer Ausführungsform der vorliegenden Erfindung.
- Figur 4b: zeigt eine Aufsicht auf die transparente Abdeckung gemäß Figur 4a.
- Figuren 4c, d: zeigen jeweils einen Querschnitt durch die transparente Abdeckung der Figuren 4a und 4b entlang der Linien I-I bzw. II-II.
- Figur 5a: zeigt einen Ausschnitt einer transparenten Abdeckung gemäß der vorliegenden Erfindung.
- Figur 5b: zeigt eine Aufsicht auf die transparente Abdeckung gemäß Figur 5a.
- Figuren 5c, d: zeigen jeweils einen Querschnitt durch die transparente Abdeckung gemäß Figur 5a und 5b entlang der Linie I-I bzw. II-II.
- Figuren 6a-c: zeigen jeweils einen Querschnitt durch einen Teilbereich von transparenten Abdeckungen gemäß der vorliegenden Erfindung.
- Figur 7a: zeigt einen Ausschnitt einer transparenten Abdeckung gemäß der vorliegenden Erfindung.
- Figur 7b: zeigt eine Aufsicht auf die transparente Abdeckung gemäß Figur 7a.
- Figuren 7c, d: zeigen jeweils einen Querschnitt durch die transparente Abdeckung gemäß Figuren 7a und 7b entlang der Linie I-I bzw. II-II.
- Figur 8a: zeigt einen Ausschnitt einer transparenten Abdeckung gemäß der vorliegenden Erfindung.
- Figur 8b, c: zeigen jeweils einen Querschnitt durch den Ausschnitt gemäß Figur 8a entlang der Linien I-I bzw. II-II.
- Figur 9a: zeigt einen Ausschnitt einer transparenten Abdeckung gemäß der vorliegenden Erfindung.
- Figuren 9b, c: zeigen jeweils einen Querschnitt durch den Ausschnitt gemäß Figur 9a entlang der Linien I-I bzw. II-II.
- Figur 10: zeigt einen Ausschnitt einer transparenten Abdeckung gemäß einer Ausführungsform der vorliegenden Erfindung.
- Figur 11: zeigt zwei Strukturelemente einer transparenten Abdeckung gemäß der vorliegenden Erfindung.
- Figur 12: zeigt drei Strukturelemente einer transparenten Abdeckung gemäß der vorliegenden Erfindung.
- Figur 13: zeigt drei Strukturelemente einer transparenten Abdeckung gemäß der vorliegenden Erfindung.
- Figur 14a-f: zeigen jeweils einen Querschnitt durch ein Strukturelement der ersten Schar gemäß der vorliegenden Erfindung.
- Figuren 15a-d: zeigen jeweils Aufsichten auf Teilbereiche von transparenten Abdeckungen gemäß der vorliegenden Erfindung.

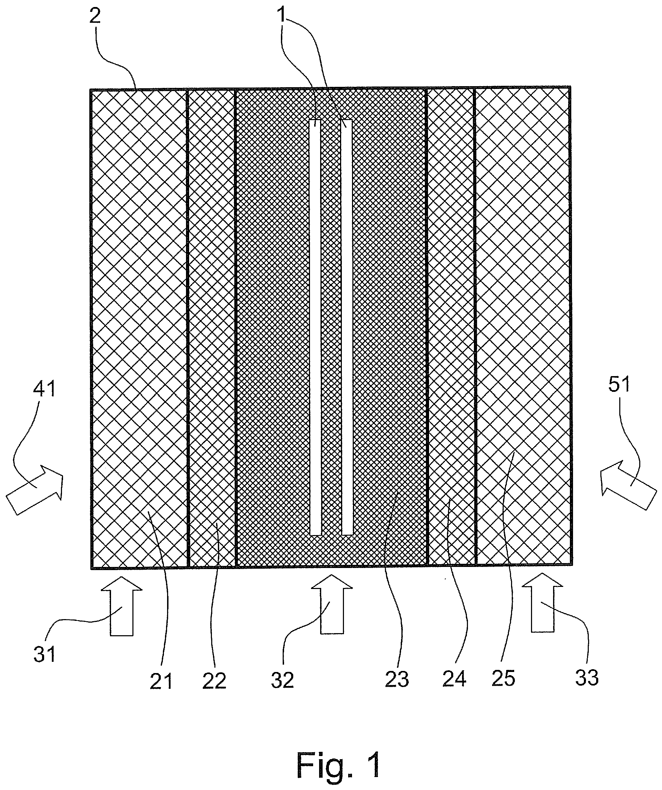

Figur 1 zeigt eine Leuchte mit einer transparenten Abdeckung 2 in einer Aufsicht auf die Lichtaustrittsfläche. Die transparente Abdeckung 2 ist rechteckig. Die Oberfläche der transparenten Abdeckung 2 weist einen ersten Teilbereich 21, einen zweiten Teilbereich 23 sowie einen dritten Teilbereich 25 auf, welche jeweils streifenförmig ausgebildet sind. Zwischen dem ersten Teilbereich 21 und dem zweiten Teilbereich 23 verläuft ein erster Übergangsbereich 22. Zwischen dem zweiten Teilbereich 23 und dem dritten Teilbereich 25 verläuft ein zweiter Übergangsbereich 24. Ebenfalls in Figur 1 dargestellt sind zwei Leuchtmittel 1, welche entlang einer Kante der transparenten Abdeckung 2 ausgerichtet sind und sich hinter dieser befinden. Die Oberflächenstruktur der transparenten Abdeckung 2 wird durch drei Scharen von jeweils gerade verlaufenden Strukturelementen in der Form von Nuten gebildet. Eine erste Schar von Strukturelementen verläuft parallel zu der Längsachse der Leuchtmittel 1. Der Verlauf der Strukturelemente der ersten Schar ist durch die Pfeile 31, 32 und 33 dargestellt. Die Oberflächenstruktur der transparenten Abdeckung 2 wird ferner durch eine zweite Schar von Nuten, welche entlang der mit Bezugszeichen 41 versehenen Richtung verlaufen, sowie eine dritte Schar von Nuten, welche entlang der mit dem Bezugszeichen 51 versehenen Richtung verlaufen, definiert. Die Verlaufsrichtungen der Strukturelemente der ersten, zweiten und dritten Schar schließen dabei Winkel zueinander ein. Die Strukturelemente der ersten Schar weisen im ersten 21 und dritten 25 Teilbereich den gleichen Flankenwinkel auf. Der Flankenwinkel der Strukturelemente im zweiten Teilbereich 23 ist jedoch kleiner. Beispielsweise können die Strukturelemente der ersten Schar im ersten und dritten Teilbereich 21, 25 jeweils einen Flankenwinkel von 116° aufweisen und im zweiten Teilbereich 23 einen Flankenwinkel von 110° aufweisen. Die Strukturelemente der zweiten und dritten Schar können einen gleichen Flankenwinkel, beispielsweise 112° aufweisen, der über die gesamte Abdeckung 2 konstant ist. Der Flankenwinkel der Strukturelemente der zweiten und dritten Schar liegt dann zwischen dem Flankenwinkel der Strukturelemente der ersten Schar in dem ersten und zweiten Teilbereich.

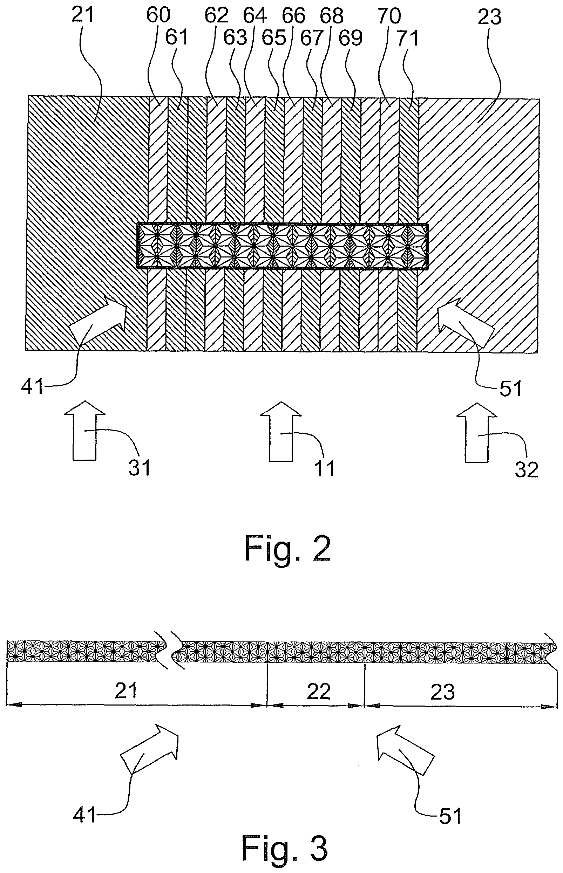

Figur 2 zeigt einen Ausschnitt aus dem Oberflächenbereich der transparenten Abdeckung 2 gemäß Figur 1 im Bereich des ersten Übergangsbereichs 22. Wie in Figur 2 dargestellt umfasst der erste Übergangsbereich eine Reihe von streifenförmigen Zonen 60-71, welche parallel zur Längsachse 11 der Leuchtmittel 1 ausgerichtet sind. Innerhalb des ersten Übergangsbereichs wechseln sich Zonen 61, 63, 65, 67, 69, 71, in welchen die Strukturelemente der ersten Schar einen höheren Flankenwinkel aufweisen, mit Zonen 60, 62, 64, 66, 68, 70 ab, in welchen die Strukturelemente der ersten Schar einen niedrigeren Flankenwinkel aufweisen. Der Flankenwinkel in den Zonen 61, 63, 65, 67, 69, 71 entspricht demjenigen im ersten Teilbereich 21. Der Flankenwinkel in den Zonen 60, 62, 64, 66, 68 70 entspricht demjenigen im zweiten Teilbereich 23. Die Zonen 60-71 besitzen dabei eine unterschiedliche Breite. Die Zone 70 mit kleinerem Flankenwinkel, welche näher an dem zweiten Teilbereich 23 angeordnet ist, ist breiter als die Zonen 60, 62, 64, 66, 68 mit kleinerem Flankenwinkel, welche weiter von dem zweiten Teilbereich 23 entfernt sind. Ebenso weist die Zone 61 mit größerem Flankenwinkel, welche näher an dem ersten Teilbereich 21 angeordnet ist, eine größere Breite auf als die Zonen 63, 65, 67, 69, 71 mit größerem Flankenwinkel, welche weiter von dem ersten Teilbereich 21 entfernt sind. Auf diese Weise wird der Übergang der Flankenwinkel von dem ersten Teilbereich 21 zu dem zweiten Teilbereich 22 abgemildert und ist für den Betrachter weniger auffällig.

Die Strukturelemente der zweiten und dritten Schar, deren Verlaufsrichtungen mit Bezugszeichen 41 und 51 versehen sind, besitzen einen gleichen Flankenwinkel von 112°, welcher sich auch in dem ersten Übergangsbereich 22 nicht ändert. Durch den Schnitt der Strukturelemente der drei Scharen wird eine Oberflächenstruktur definiert, wie sie in einer Aufsicht im Zentrum der Figur 2 dargestellt ist. Die Oberflächenstruktur unterscheidet sich dabei in einem dem ersten Teilbereich 21 benachbarten Abschnitt des ersten Übergangsbereichs 22 von einem dem zweiten Teilbereich 23 benachbarten Abschnitt des ersten Übergangsbereichs 22.

Zur Vereinfachung der Darstellung werden die Bezugszeichen 21-25 für die verschiedenen Teilbereiche entsprechend den Figuren 1 und 2 auch für die folgende Beschreibung weiterer Ausführungsformen verwendet.

Figur 3 zeigt eine Oberflächenstruktur einer transparenten Abdeckung in einer Aufsicht. Dabei ist ein erster Teilbereich 21 und ein zweiter Teilbereich 23 dargestellt, welche durch einen Übergangsbereich 22 miteinander verbunden sind. Von der transparenten Abdeckung 2 der Figuren 1 und 2 unterscheidet sich diese transparente Abdeckung dadurch, dass der Übergangsbereich 22 schmaler ist.

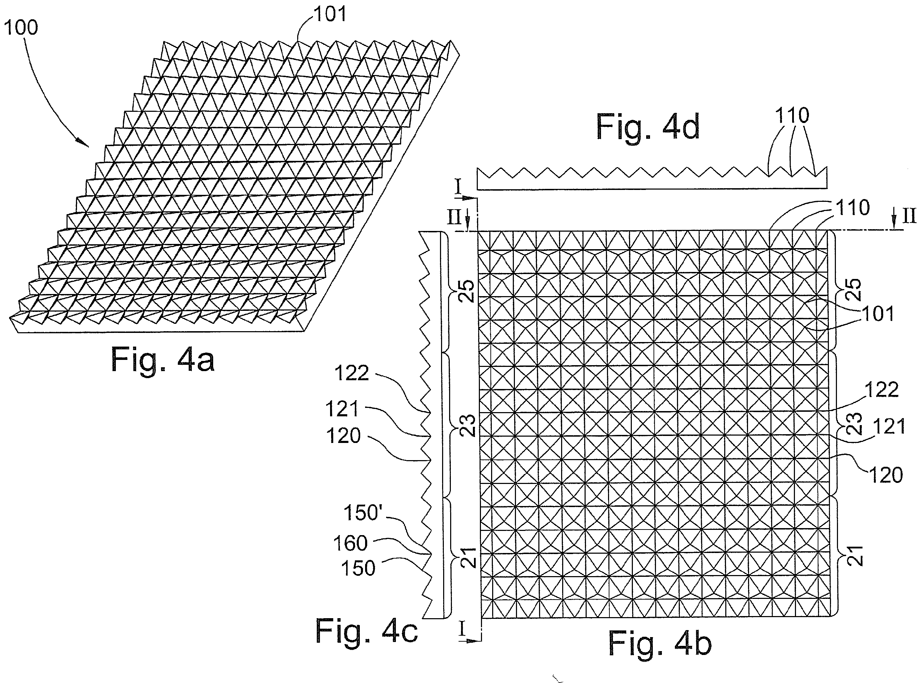

Figur 4a zeigt eine transparente Abdeckung 100 gemäß der vorliegenden Erfindung. Die transparente Abdeckung 100 weist eine Vielzahl von Unterstrukturen auf, welche hier allgemein mit dem Bezugszeichen 101 bezeichnet sind. Figur 4b zeigt eine Aufsicht auf den Ausschnitt der transparenten Abdeckung 100. Die pyramidenförmigen Unterstrukturen 101 entstehen dabei zwischen parallel verlaufenden, jeweils einer geradlinigen Basislinie folgenden ersten Schar von Strukturelementen 120-122 und einer zweiten Schar von Strukturelementen 110. Die Strukturelemente 110 schneiden die Strukturelemente 120-122 jeweils in einem Winkel von 90°. Zwischen den Strukturelementen sind dabei die Unterstrukturen 101 gebildet.

Die Strukturelemente sind als V-förmige Nuten ausgebildet. Die zwischen den Strukturelementen 110, 120-122 gebildeten Unterstrukturen haben Pyramidenform. Wie in der Figur 4c, welche einen Querschnitt durch den Ausschnitt der Figuren 4a, b an der Stelle I-I zeigt, ersichtlich, weist jedes Strukturelement 120-122 in dem Querschnitt senkrecht zu seiner Basislinie, d.h. senkrecht zu seiner Verlaufslinie zwei gerade Flankenschenkel 150, 150' auf. Die beiden Flankenschenkel 150, 150' jedes Strukturelements 120-122 berühren einander in einem Berührpunkt 160. Dabei schließen sie einen Winkel ein, wobei die Flankenschenkel der Strukturelemente 120 bis 122 unterschiedliche Winkel einschließen. So nimmt, wie in Figur 4c erkennbar, der zwischen den Flankenschenkeln gebildete Flankenwinkel am unteren Ende des Querschnitts beginnend zunächst zu, um anschließend zum oberen Ende hin wieder abzunehmen. Der Flankenwinkel ist in Teilbereichen 21, 25 kleiner als in einem zwischen den Teilbereichen 21, 25 befindlichen Teilbereich 23. Ferner ist eine Winkelhalbierende des Flankenwinkels in den Teilbereichen 21, 25 stärker gegenüber einer Flächennormalen der Grundfläche geneigt als in dem Teilbereich 23. Figur 4d zeigt einen Querschnitt durch die Strukturelemente 110 der zweiten Schar entlang der Linie II-II der Figur 4b. Die Strukturelemente 110 weisen dabei jeweils einen gleichen Querschnitt auf. Insbesondere ist der zwischen den beiden geraden Flankenschenkeln der Strukturelemente 110 eingeschlossene Flankenwinkel jeweils gleich.

Durch die unterschiedlichen Flankenwinkel der Strukturelemente 120-122 der ersten Schar haben auch die pyramidenförmigen Unterstrukturen der transparenten Abdeckung 100 wie in den Figuren 4a und 4b erkennbar unterschiedliche Gestalt. Während die in der Mitte der Figur 4d gezeigten Unterstrukturen 101 annähernd gleichseitigen Pyramiden entsprechen, sind die Spitzen der Pyramiden, die an den Ecken des Ausschnitts gebildet sind, von der Mitte ihrer Grundfläche weg verschoben. Auf diese Weise ergibt sich eine Vielzahl von Neigungen der Seitenflächen der Unterstrukturen 101 über der transparenten Abdeckung 100.

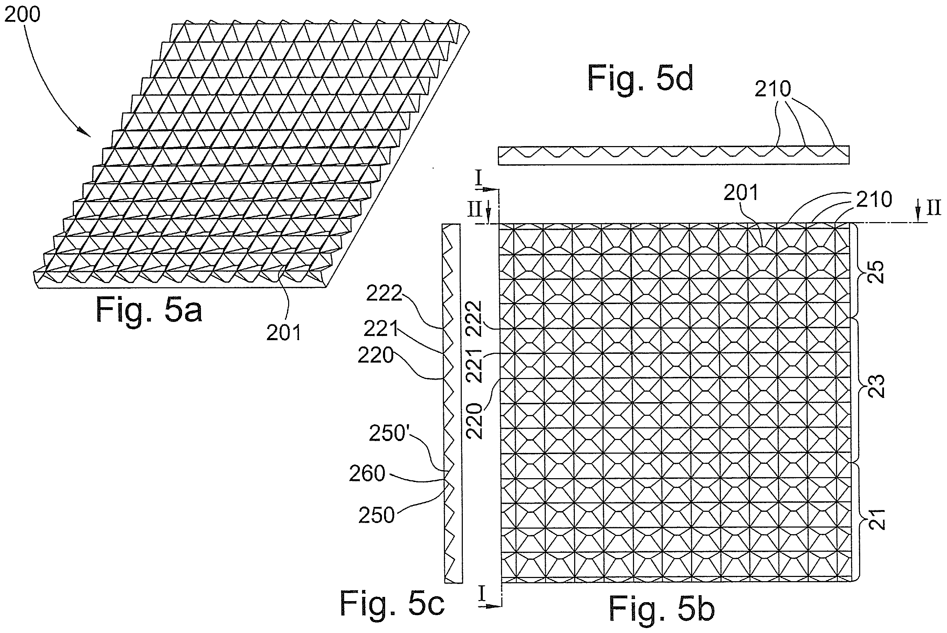

Figur 5a zeigt einen Ausschnitt einer weiteren transparenten Abdeckung 200 gemäß der vorliegenden Erfindung. Dabei sind eine Vielzahl von Unterstrukturen 201 als prismatische Rücksprünge auf der Oberfläche der transparenten Abdeckung 200 gebildet. Figur 5b zeigt den Ausschnitt der Figur 5a in Aufsicht. Die Unterstrukturen 201 weisen dabei als tiefste Strukturen Firstlinien auf. Ferner besitzen die Unterstrukturen 201 jeweils vier Seitenflächen. Die Unterstrukturen 201 werden dabei ähnlich wie in Figur 5b dargestellt durch zwei Scharen von geradlinig verlaufenden Strukturelementen gebildet. Die Strukturelemente 210, 220-222 sind dabei jeweils als geradlinig verlaufende Vorsprünge mit V-förmigem Querschnitt ausgebildet. Die Strukturelemente 220-222 einer ersten Schar sind parallel angeordnet und schneiden die Strukturelemente 210 einer zweiten Schar jeweils in einem Winkel von 90°. Wie in der Figur 5c erkennbar, schlie-ßen die Flankenschenkel 250, 250' verschiedener Strukturelemente 220-222 an ihrem Berührpunkt 260 unterschiedliche Flankenwinkel ein. Der Flankenwinkel der Strukturelemente 220-222 der ersten Schar variiert dabei in dem Querschnitt der Figur 5c von unten nach oben, indem er zunächst in einem ersten Abschnitt zunimmt und anschließend in einem zweiten Abschnitt wieder abnimmt. Der Flankenwinkel ist in Teilbereichen 21, 25 kleiner als in einem zwischen den Teilbereichen 21, 25 befindlichen Teilbereich 23. Hingegen weisen die Strukturelemente 210 der zweiten Schar, welche zu den Strukturelementen 220-222 der ersten Schar senkrecht verlaufen, jeweils einen gleichen Querschnitt auf (siehe Figur 5d).

Die zwischen den Strukturelementen 220-222 und den Strukturelementen 210 gebildeten Unterstrukturen 201 sind daher unterschiedlich. Insbesondere befinden sich die Firstlinien der Unterstrukturen 201 in der Mitte des in Figur 5b gezeigten Ausschnitts jeweils im Bereich des Zentrums der Grundfläche der Unterstrukturen. Hingegen sind die Firstlinien der Unterstrukturen 201 in den Ecken des Ausschnitts aus dem Zentrum der Grundflächen verschoben.

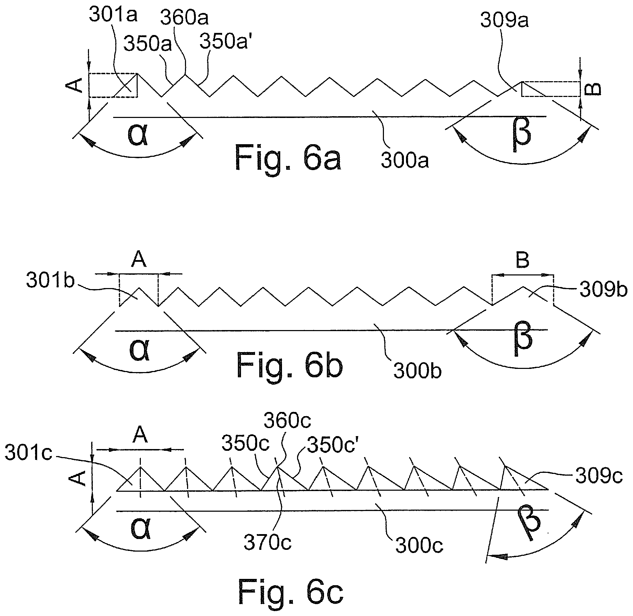

Die Figuren 6a-c zeigen jeweils einen Querschnitt durch eine erste Schar von Strukturelementen. Die Strukturelemente 301a-309a der transparenten Abdeckung 300a gemäß Figur 6a sind als Vorsprünge ausgebildet und weisen einen V-förmigen Querschnitt auf. Dabei besitzt jedes der Strukturelemente im Querschnitt zwei Flankenschenkel 350a, 350a', welche sich in einem Berührpunkt 360a berühren. Die Berührpunkte 360a stellen hierbei die höchsten Erhebungen der Oberflächenstruktur der transparenten Abdeckung 300a dar.

Benachbarte Strukturelemente 301a-309a der transparenten Abdeckung 300a weisen dabei unterschiedliche Flankenwinkel α, β auf. So nimmt der Flankenwinkel von dem Strukturelement 301a zu dem Strukturelement 309a zu. Die Variation des Flankenwinkels erfolgt wie in Figur 6a gezeigt kontinuierlich über mehrere dazwischen angeordnete Strukturelemente. Der Flankenwinkel α, β wird hier dadurch variiert, dass die Höhe der Strukturelemente 301a-309a variiert. Die Höhe A des Strukturelements 301a ist dabei größer als die Höhe B des Strukturelements 309a. Dabei bezeichnet die Höhe eines Strukturelements den senkrecht zu der Grundfläche der transparenten Abdeckung 300a gemessenen Abstand zwischen dem höchsten und dem niedrigsten Punkt des Strukturelements.

Figur 6b zeigt einen weiteren Querschnitt durch eine transparente Abdeckung 300b. Die transparente Abdeckung 300b weist dabei eine Reihe von parallelen, geradlinig verlaufenden Strukturelementen 301b-309b auf, welche als im Querschnitt V-förmige Vorsprünge ausgebildet sind. Der Flankenwinkel der Strukturelemente nimmt dabei von dem Strukturelement 301b zu dem Strukturelement 309b über mehrere dazwischen angeordnete Strukturelemente zu. Der Flankenwinkel wird hierbei dadurch variiert, dass eine Breite A, B der Strukturelemente 301b-309b variiert. Unter der Breite A, B eines Strukturelements wird dabei der parallel zu der Grundfläche der transparenten Abdeckung 300b gemessene Abstand zwischen zwei niedrigsten Punkten, falls das Strukturelement als Vorsprung ausgebildet ist, oder zwischen zwei höchsten Punkten, falls das Strukturelement als Rücksprung ausgebildet ist, verstanden.

Figur 6c zeigt einen Querschnitt durch eine transparente Abdeckung 300c. Die transparente Abdeckung 300c weist mehrere nebeneinander angeordnete Strukturelemente 301c-309c auf. Die Strukturelemente 301c-309c weisen jeweils einen V-förmigen Querschnitt auf und sind als Vorsprünge ausgebildet. Jedes der Strukturelemente 301c-309c weist im Querschnitt zwei Flankenschenkel 350c, 350c' auf, welche sich an einem Berührpunkt 360c berühren. Die Berührpunkte 360c stellen jeweils die höchsten Erhebungen der Strukturelemente dar. Der Flankenwinkel, welcher von den Flankenschenkeln 350c, 350c' eines Strukturelements eingeschlossen wird, variiert dabei von einem Strukturelement zum nächsten. Insbesondere nimmt der Flankenwinkel ausgehend von dem Strukturelement 301c zu dem Strukturelement 309c von einem Wert α zu einem Wert β ab. Der Flankenwinkel ist hier dadurch variiert, dass die Lage des Berührpunktes 360c innerhalb des Querschnitts jedes Strukturelements variiert. Während sich der Berührpunkt des Strukturelements 201c mittig in dem Querschnitt befindet, ist der Berührpunkt des Strukturelements 301c aus der Mitte des Querschnitts des Strukturelements verschoben. Während die Winkelhalbierende des Flankenwinkels des Strukturelements 301c senkrecht zu der Grundfläche der transparenten Platte 300c verläuft, ist sie bei dem Strukturelement 309c gegenüber der Vertikalen geneigt. Die Berührpunkte 360c der Strukturelemente 301c-309c weisen dabei die gleiche Höhe über der Grundfläche der transparenten Abdeckung 300c auf.

In anderen Ausführungsformen können die in der Figuren 6a-c gezeigten Strukturelemente als Rücksprünge ausgebildet sein.

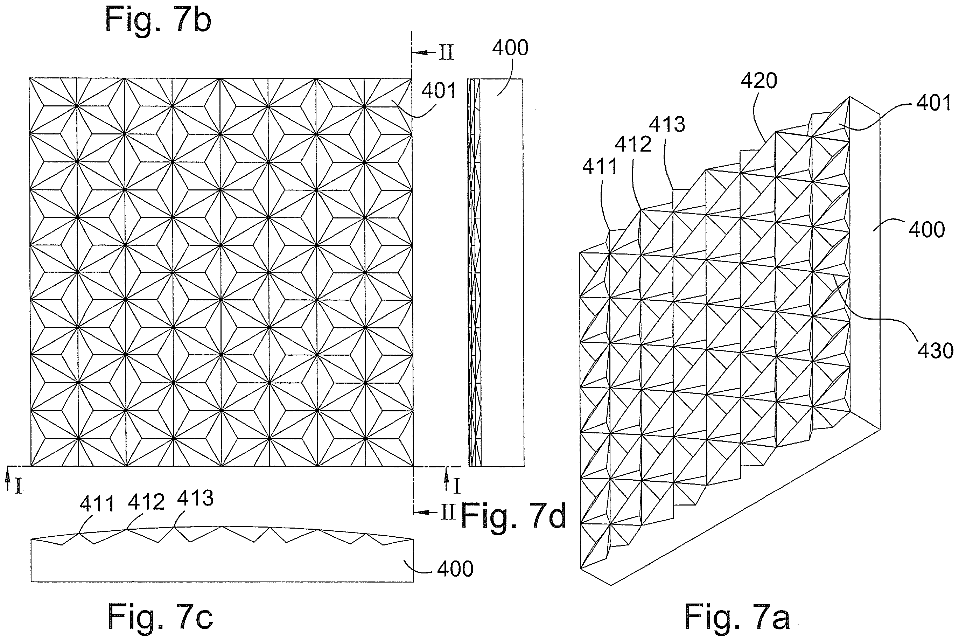

Figur 7a zeigt eine transparente Abdeckung 400 mit prismatischen Vertiefungen, welche allgemein mit dem Bezugszeichen 401 bezeichnet sind. Die transparente Abdeckung 400 ist als transparente Platte ausgebildet. Die prismatischen Vertiefungen 401 werden durch drei Scharen von geradlinig verlaufenden Strukturelementen 411-413, 420, 430 gebildet. Die Strukturelemente jeder dieser Scharen verlaufen dabei jeweils parallel zueinander und schließen mit den Strukturelementen der anderen Scharen einen Winkel von 60° ein. Figur 7b zeigt eine Aufsicht auf die transparente Abdeckung 400. Die prismatischen Vertiefungen 401 weisen jeweils drei Seitenflächen auf. Wie in dem Querschnitt der Figur 7c erkennbar ist, weisen benachbarte Strukturelemente 411-413 der ersten Schar unterschiedliche Flankenwinkel auf. Dies wird dadurch erreicht, dass die Höhe der Strukturelemente, d.h. der Abstand der Punkte der höchsten Erhebung jedes Strukturelements zu seiner tiefsten Vertiefung variiert. Auch in dem senkrecht hierzu stehenden Querschnitt der Figur 7d ist erkennbar, dass die höchsten Erhebungen der transparenten Abdeckung 400 in dem Ausschnitt der Figur 7b vom rechten Rand beginnend zunächst zunimmt.

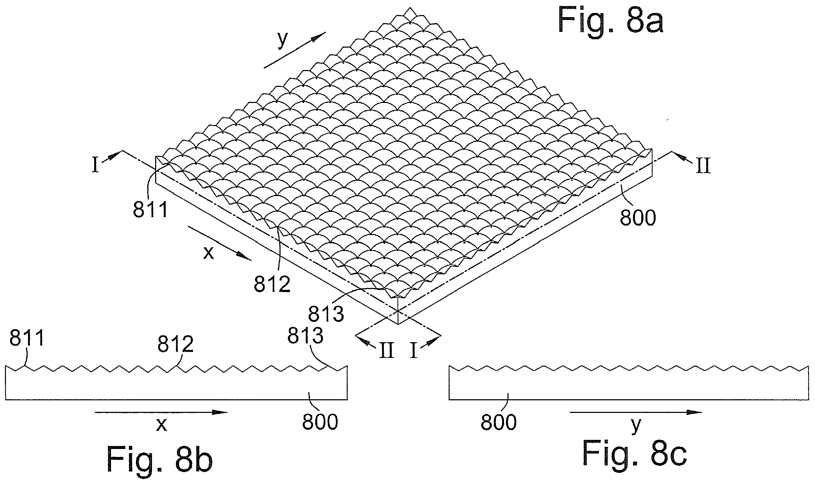

Figur 8a zeigt eine transparente Abdeckung 800. Die transparente Abdeckung 800 weist auf einer Oberfläche eine Vielzahl von kegelförmigen Vorsprüngen 811-813 auf. Die kegelförmigen Vorsprünge sind dabei gleichmäßig angeordnet. Insbesondere sind die Vorsprünge 811-813 in Spalten und Zeilen angeordnet. Benachbarte Vorsprünge haben dabei den gleichen Abstand zueinander. In y-Richtung benachbarte kegelförmige Vorsprünge weisen jeweils den gleichen Kegelwinkel auf (s. Fig. 8c) und können als Unterstrukturelemente angesehen werden, die ein Strukturelement bilden. Das Strukturelement erstreckt sich entlang einer parallel zur y-Richtung verlaufenden Basislinie. Mehrere derartige Strukturelemente sind in x-Richtung periodisch nebeneinander angeordnet.

In dem Querschnitt der Figur 8b ist erkennbar, dass der Kegelwinkel von dem Vorsprung 811 zu dem Vorsprung 812 in x-Richtung zunächst abnimmt und anschließend zu dem Vorsprung 813 wieder zunimmt. In x-Richtung benachbarte Vorsprünge 811-813 weisen daher unterschiedliche Kegelwinkel auf. In einem Querschnitt, welcher quer zur y-Richtung durch die Spitzen der Kegel verläuft (siehe Figur 8b) schließen die Flankenschenkel benachbarter Kegel, die durch den Schnitt mit der Mantelfläche entstehen, daher unterschiedliche Flankenwinkel ein.

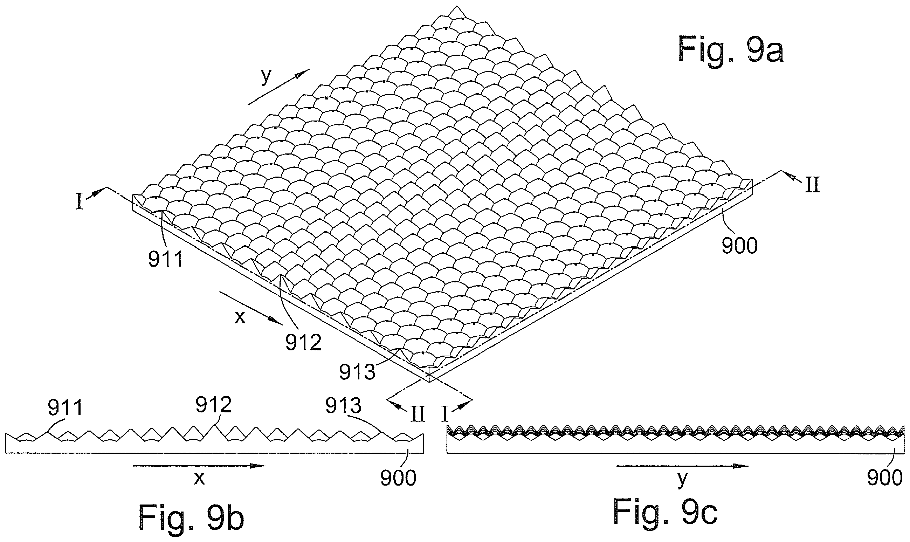

Figur 9a zeigt einen Ausschnitt einer weiteren transparenten Abdeckung 900. Diese weist auf einem Teilbereich einer Oberfläche mehrere kegelförmige Vorsprünge 911-913 auf. Die Vorsprünge 911-913 sind dabei in Spalten und in Zeilen angeordnet. In y-Richtung benachbarte Vorsprünge bilden dabei ein Strukturelement, dessen Kegelwinkel jeweils gleich sind (s. Fig. 9c). Benachbarte Strukturelemente sind dabei in x-Richtung versetzt angeordnet, so dass eine Sechseck-Waben-Struktur gebildet ist.

In x-Richtung benachbarte Vorsprünge 911-913 weisen unterschiedliche Kegelwinkel, d.h. unterschiedliche Flankenwinkel auf. Wie in dem Querschnitt der Figur 9b erkennbar, nimmt der Kegelwinkel von dem Vorsprung 911 zu dem Vorsprung 912 zunächst ab, während der Winkel anschließend über mehrere Vorsprünge zu dem Vorsprung 913 hin wieder zunimmt.

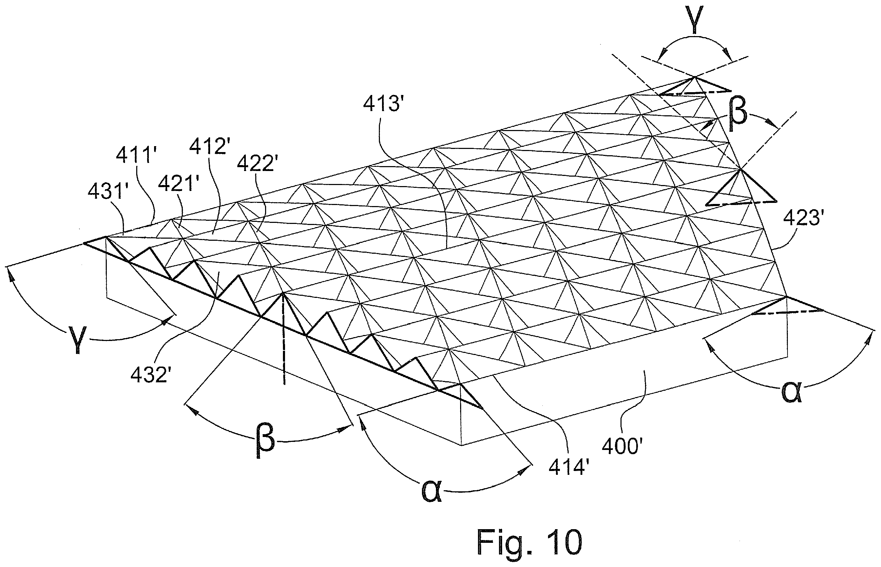

Figur 10 zeigt eine perspektivische Ansicht eines Ausschnitts einer transparenten Abdeckung 400'. Die Oberflächenstruktur der transparenten Abdeckung 400' ist durch drei Scharen von Strukturelementen gebildet. Die Strukturelemente sind dabei jeweils als V-förmige, einer geraden Basislinie folgende Vorsprünge ausgebildet. Die Vorsprünge weisen jeweils Flankenseiten auf, die sich an einer Firstlinie berühren. Eine erste Schar von Strukturelementen 411'-414' verlaufen parallel zueinander, wobei benachbarte Strukturelemente der ersten Schar einen unterschiedlichen Flankenwinkel aufweisen. Strukturelement 411' im hinteren Bereich der in Figur 10 dargestellten transparenten Abdeckung 400' weist einen Flankenwinkel γ auf, während Strukturelement 413', welches ebenfalls zur ersten Schar gehört, im mittleren Bereich angeordnet ist und einen Flankenwinkel β aufweist. Ein weiteres Strukturelement 414' der ersten Schar, welches im vorderen Bereich der Figur 10 dargestellt ist, weist einen Flankenwinkel α auf. Von hinten nach vorne gesehen nimmt der Flankenwinkel benachbarten Strukturelemente 411'-414' von einem Winkel γ zunächst zu einem Winkel β über mehrere Strukturelemente streng monoton zu und nimmt anschließend über mehrere Strukturelemente streng monoton zu einem Flankenwinkel α ab. Die Strukturelemente 411'-414' der ersten Schar werden von zwei weiteren Scharen von Strukturelementen geschnitten. Dabei ist eine zweite Schar von Strukturelementen 421', 422', 423' vorgesehen. Die Strukturelemente 421', 422' und 423' verlaufen gerade und parallel zueinander. Wie anhand des Strukturelementes 423' dargestellt variiert der Flankenwinkel dieser Strukturelemente entlang ihres Verlaufs. Im oberen Bereich der in Figur 10 dargestellten transparenten Abdeckung 400' weist das Strukturelement 423' der zweiten Schar einen Flankenwinkel γ auf, welcher zum mittleren Bereich bis auf einen Winkel β abnimmt zu einem unteren Bereich hin nimmt der Flankenwinkel des Strukturelements 423' anschließend auf einen Wert α zu.

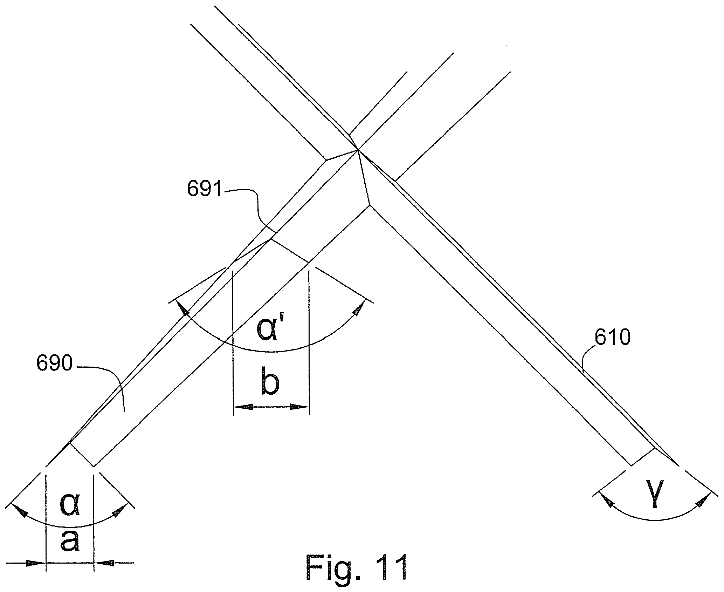

Figur 11 zeigt zwei, jeweils einer Basislinie folgende Strukturelemente 610, 690. Die länglichen Strukturelement 610, 690 schließen dabei einen Winkel von 90° ein und sind als im Querschnitt V-förmige Vorsprünge ausgebildet. Das Strukturelement 610 besitzt zwei Flankenseiten, welche einen Flankenwinkel γ einschließen. Der Flankenwinkel γ ist dabei über den Verlauf des Strukturelements 610 konstant, d.h. das Strukturelement 610 ist translationssymmetrisch entlang seiner Basislinie. Das Strukturelement 690 besitzt ebenfalls im Querschnitt zwei Flankenschenkel, welche einen Flankenwinkel α, α' einschließen. Der Flankenwinkel α, α' variiert dabei allerdings entlang des Verlaufs der Basislinie 691 des Strukturelements 690. Die Variation des Flankenswinkels α, α' erfolgt hier dadurch, dass eine Breite a, b des Strukturelements 690 entlang des Verlaufs der Basislinie 691 zunimmt. Nicht gezeigt sind weitere Strukturelemente der ersten Schar, die parallel zum Strukturelement 690 verlaufen, sowie weitere Strukturelemente zweiten Schar, die parallel zum Strukturelement 610 verlaufen.

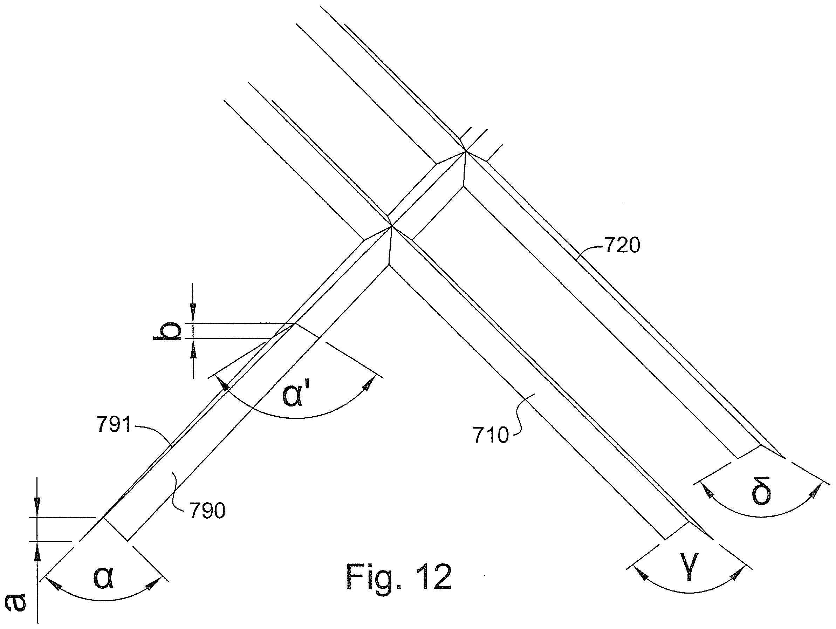

Figur 12 zeigt eine ähnliche Anordnung von Strukturelementen wie Figur 11. Dabei ist ein erstes Strukturelement 790 vorgesehen, welches einer geraden Basislinie 791 folgt und einem entlang der Basislinie 791 variierenden Flankenwinkel α, α' aufweist. Die Variation des Flankenwinkels α, α' erfolgt hierbei dadurch, dass eine Höhe a, b, des Strukturelements 790 entlang des Verlaufs der Basislinie 791 abnimmt. Das erste Strukturelement 790 wird von zwei weiteren Strukturelementen 710, 720 jeweils in einem Winkel von 90° geschnitten. Die Strukturelemente 710, 720 folgen dabei ebenfalls jeweils einer geraden Basislinie und verlaufen parallel zueinander. Die Strukturelemente 710, 720 besitzen jeweils im Querschnitt zwei Flankenschenkel. Die Flankenschenkel des Strukturelements 710 schließen einen Flankenwinkel γ ein, welcher entlang des Verlaufs des Strukturelements 710 konstant ist. Die Flankenschenkel des Strukturelements 720 schließen einen Flankenwinkel δ ein, welcher ebenfalls entlang des Verlaufs der Basislinie des Strukturelements 720 konstant ist. Der Flankenwinkel δ des Strukturelements 720 ist dabei grö-βer als der Flankenwinkel γ des Strukturelements 710.

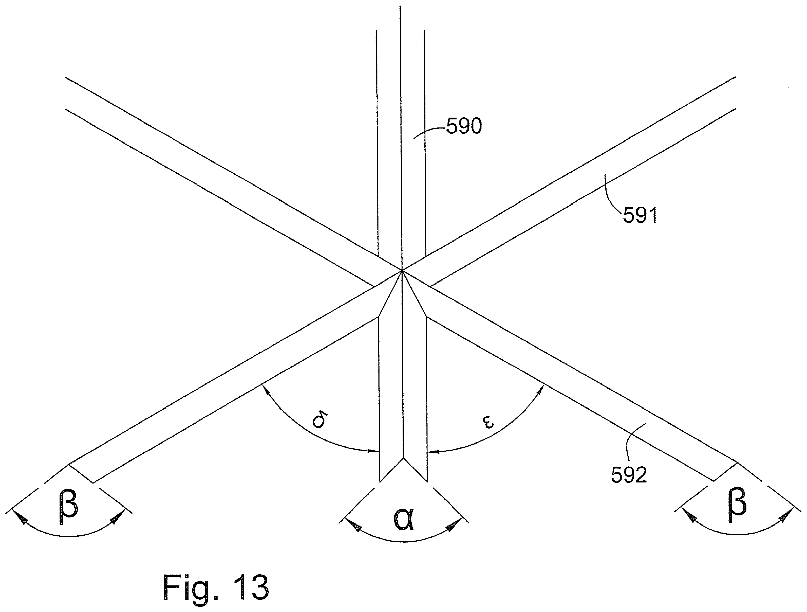

Figur 13 zeigt eine Oberflächenstruktur einer transparenten Abdeckung mit drei Strukturelementen 590-592. Die Strukturelemente 590-592 folgen dabei jeweils einer geraden Basislinie und sind als im Querschnitt V-förmige Vorsprünge ausgebildet. Die Strukturelemente 590-592 weisen jeweils zwei Flankenseiten auf, die sich an einer Firstlinie berühren. Die Flankenseiten der Strukturelemente 591 und 592 schließen den gleichen Flankenwinkel β ein, während das Strukturelement 590 einen anderen Flankenwinkel α aufweist. Die Strukturelemente 590 und 591 schneiden sich in einem Winkel δ. Die Strukturelemente 590 und 592 schneiden sich in einem Winkel ε.

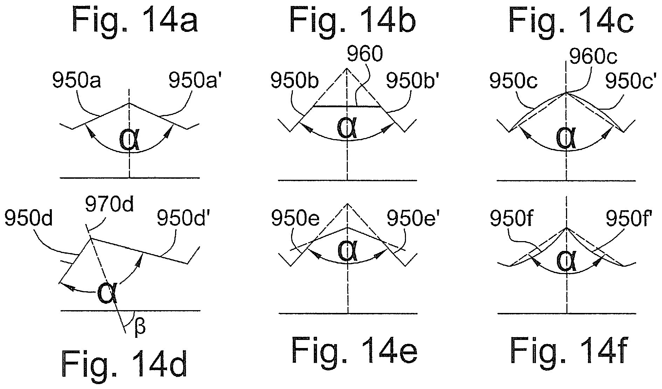

Figur 14a-f zeigen Querschnitte durch verschiedene Arten von Strukturelementen in der Form von Vorsprüngen, welche bei einer erfindungsgemäßen Abdeckung als Strukturelemente einer ersten Schar verwendet werden können. Figur 14a zeigt ein Strukturelement mit zwei gerade verlaufenden Flankenschenkeln 950a, 950a' im Querschnitt. Die beiden Flankenschenkel 950a, 950a' berühren sich in einem Punkt und schließen dort einen Flankenwinkel α ein. Figur 14b zeigt ebenfalls einen Querschnitt durch ein Strukturelement mit zwei Flankenschenkeln 950b. 950b'. Diese berühren sich jedoch nicht, sondern schließen einen ebenen Zwischenbereich 960 zwischen sich ein, welcher parallel zu einer Grundfläche der transparenten Abdeckung verläuft. Der Flankenwinkel α entspricht dabei demjenigen Winkel, welcher durch die Flankenschenkel 950b, 950b' eingeschlossen wird, wobei zur Konstruktion des Flankenwinkels α die Flankenschenkel gedanklich nach oben hin zu verlängern sind (siehe gestrichelte Linien in Figur 14b).

Figur 14c zeigt einen Querschnitt durch ein weiteres Strukturelement mit zwei Flankenschenkeln 950c, 950c'. Die Flankenschenkel 950c, 950c' sind konvex gekrümmt und berühren sich an einem Berührpunkt 960c. Der Flankenwinkel α entspricht in dieser Ausführungsform dem Winkel, welcher durch die Sekanten der Flankenschenkel 950c, 950c' eingeschlossen wird.

Figur 14d zeigt einen Querschnitt durch ein weiteres Strukturelement einer ersten Schar mit zwei Flankenschenkeln 950d, 950d', welche gerade verlaufen und sich berühren. Die Flankenschenkel 950d, 950d' schließen einen Flankenwinkel α ein. Ebenfalls in Figur 14d ist eine Winkelhalbierende 970d des Flankenwinkels α eingezeichnet. Die Winkelhalbierende 970d schließt mit einer Grundfläche der transparenten Abdeckung einen Neigungswinkel β ein. Zur Variation des Parameters des Strukturelements können verschiedene Strukturelemente der ersten Schar verschiedene Neigungswinkel β aufweisen, d.h. die Neigung der Winkelhalbierenden kann unterschiedlich sein. In einigen Ausführungsformen kann sich die Neigung der Winkelhalbierenden entlang der Basislinie eines Strukturelements ändern.

Figur 14e zeigt einen Querschnitt durch ein weiteres Strukturelement mit zwei Flankenschenkeln 950e, 950e'. Die Flankenschenkel 950e, 950e' verlaufen gerade und schließen zwei weitere Flankenschenkel ein. Der von den Flankenschenkeln 950e, 950e' eingeschlossene Flankenwinkel α ergibt sich in einer Konstruktion mittels gedachter Hilfslinien (gestrichelt eingezeichnet), welche eine Verlängerung der Flankenschenkel darstellen.

Figur 14f zeigt ein weiteres Strukturelement mit zwei Flankenschenkeln 950f, 950f'. Die Flankenschenkel 950f, 950f' sind jeweils konkav gekrümmt und berühren sich an einem Punkt. Der von den Flankenschenkeln 950f, 950f' eingeschlossene Flankenwinkel α entspricht dabei dem Schnittwinkel der Sekanten der Flankenschenkel 950f, 950f', wie in Figur 14f gezeigt.

In anderen, nicht gezeigten Ausführungsformen kann einer der Flankenschenkel gerade verlaufen, während der andere Flankenschenkel gekrümmt, insbesondere konkav oder konvex gekrümmt ist. Die Flankenschenkel können sich berühren. Alternativ können die Flankenschenkel einen Zwischenbereich zwischen sich einschließen. Der Zwischenbereich kann eben verlaufen, angewinkelt sein oder beliebig gekrümmt sein.

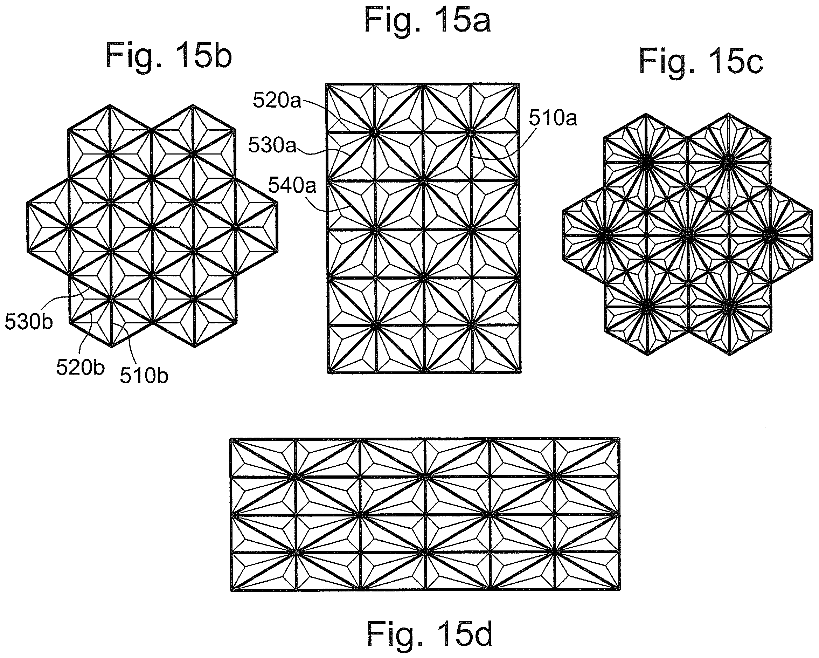

Die Figuren 15a-d zeigen jeweils Aufsichten auf verschiedene Oberflächenausschnitte einer transparenten Abdeckung gemäß der vorliegenden Erfindung. In der transparenten Abdeckung der Figur 15a sind dabei vier Scharen von Strukturelementen 510a, 520a, 530a, 540a vorgesehen, wobei die Strukturelemente jeder Schar jeweils parallel zueinander verlaufen. Die Strukturelemente verschiedener Scharen schließen dabei einen Winkel von 45° oder 90° ein. Auf diese Weise werden zwischen den Strukturelementen prismatische Vorsprünge oder Rücksprünge gebildet, welche drei Seiten aufweisen. Figur 15b zeigt eine Oberflächenstruktur mit drei Scharen von Strukturelementen 510b, 520b, 530b, die zueinander einen Winkel von jeweils 60° einschließen. Die Figuren 15c und 15d zeigen weitere Ausgestaltungen der Oberflächenstruktur einer transparenten Abdeckung in der Aufsicht. Jede der gezeigten Scharen von Strukturelementen kann dabei unterschiedliche Flankenwinkel aufweisen. In anderen Ausführungsformen können die Strukturelemente der verschiedenen Scharen unterschiedliche Winkel zueinander einschließen.

Modifikationen der beschriebenen Ausführungsformen sind erfindungsgemäß möglich. Insbesondere können die Strukturelemente als Vorsprünge oder als Rücksprünge ausgestaltet sein. Ferner können sich zwischen Abschnitten zunehmender Flankenwinkel und Abschnitten abnehmender Flankenwinkel Strukturelemente mit jeweils einem gleichen Flankenwinkel befinden. Es kann eine alternierende Abfolge von Teilbereichen mit größerem und Teilbereichen mit kleinerem Flankenwinkel auf dem Oberflächenbereich vorgesehen sein.

### Bezugszeichenliste:

1 Leuchtmittel
2, 100, 200, 300a-c, 400, 400', 800, 900 transparente Abdeckung
11 Längsachse
21 erster Teilbereich
23 zweiter Teilbereich
25 dritter Teilbereich
22,24 Übergangsbereich
31-33,41,51 Verlaufsrichtung der Strukturelemente
60-71 Zonen
101,201,401 Unterstruktur
110, 120-122, 210, 220-222, 301a-c, 309a-c, 411-413, 411'-414', 421', 422' 431', 432', 420, 430, 510a, b, 520a, b, 530a, b, 540a, 590-592, 610, 690, 710, 720, 790 Strukturelement
150, 150', 250, 250', 350a, 350a', 350c, 350c', 950a-f, 950a'-f' Flankenschenkel
960 Zwischenbereich
160, 260, 960c Berührpunkt
370c, 970d Winkelhalbierende
691, 791 Basislinie
811-813,911-913 Vorsprünge

## Patentansprüche

1. Transparente Abdeckung (2; 100; 200; 300a-c; 400; 400'; 800; 900) für eine Leuchte, wobei die transparente Abdeckung auf einer Grundfläche zumindest einen Oberflächenbereich mit einer Oberflächenstruktur aufweist, welche durch zumindest eine erste Schar von jeweils einer Basislinie (691; 791) folgenden Strukturelementen (120-122; 220-222; 301a-c, 309a-c; 411-413; 411'-414', 421'-423'; 510a-540a; 510b-530b; 690; 710, 720, 790) definiert ist, wobei jedes Strukturelement der ersten Schar in einem Querschnitt senkrecht zu der Basislinie (691; 791) einen ersten Flankenschenkel (150; 250; 350a; 350c, 950a-f) aufweist, welcher einen Neigungswinkel mit der Grundfläche einschließt,
wobei der Oberflächenbereich zumindest einen ersten Teilbereich (21), einen dritten Teilbereich (25) sowie einen zwischen dem ersten und dritten Teilbereich (21, 25) befindlichen zweiten Teilbereich (23) aufweist, wobei der Neigungswinkel der ersten Flankenschenkel der Strukturelemente der ersten Schar in dem ersten Teilbereich (21) und in dem dritten Teilbereich (25) in einem ersten Neigungswinkelbereich liegt, und wobei der Neigungswinkel der ersten Flankenschenkel der Strukturelemente der ersten Schar in dem zweiten Teilbereich (23) in einem zweiten Neigungswinkelbereich liegt, wobei der erste und der zweite Neigungswinkelbereich voneinander getrennt sind, wobei der erste und der zweite Teilbereich (21, 23) durch einen Strukturelemente der ersten Schar aufweisenden ersten Übergangsbereich (22) verbunden sind, und der zweite und der dritte Teilbereich (23, 25) durch einen Strukturelemente der ersten Schar aufweisenden zweiten Übergangsbereich (24) verbunden sind, **dadurch gekennzeichnet, dass** der Neigungswinkel der ersten und zweiten Flankenschenkel der Strukturelemente der ersten Schar in dem ersten und zweiten Übergangsbereich (22, 24) zumindest abschnittsweise zwischen einem Wert aus dem ersten Neigungswinkelbereich und einem Wert aus dem zweiten Neigungswinkelbereich alterniert.

2. Transparente Abdeckung (2; 100; 200; 300a-c; 400; 400'; 800; 900) nach Anspruch 1, wobei zumindest einige, insbesondere jedes Strukturelement der ersten Schar in dem Querschnitt senkrecht zu der Basislinie ferner einen zweiten Flankenschenkel (150'; 250'; 350a'; 350c'; 950a'-f') aufweist, wobei der erste und der zweite Flankenschenkel einen Flankenwinkel (α, α', β) einschließen, wobei der Flankenwinkel (α, α', β) und/oder eine Neigung einer Winkelhalbierenden (370c; 970d) des Flankenwinkels (α, α', β) gegenüber einer Flächennormalen der Grundfläche in dem ersten und dritten Teilbereich (21) und in dem zweiten Teilbereich (23) unterschiedlich ist.

3. Transparente Abdeckung (2; 100; 200; 300a-c; 400; 400'; 800; 900) nach Anspruch 2, wobei der Flankenwinkel (α, α', β) in dem ersten Teilbereich (21) und in dem dritten Teilbereich (25) in einem ersten Flankenwinkelbereich liegt, und wobei der Flankenwinkel (α, α', β) in dem zweiten Teilbereich (23) in einem zweiten Flankenwinkelbereich liegt, wobei der erste und der zweite Flankenwinkelbereich voneinander getrennt sind.

4. Transparenter Abdeckung (2; 100; 200; 300a-c; 400; 400'; 800; 900) nach Anspruch 2 oder 3, wobei der zweite Flankenschenkel (150'; 250'; 350a'; 350c'; 950a'-f') einen Neigungswinkel mit der Grundfläche einschließt, wobei der Neigungswinkel der zweiten Flankenschenkel der Strukturelemente der ersten Schar in dem ersten Teilbereich (21) und in dem dritten Teilbereich (25) in dem ersten oder dem zweiten Neigungswinkelbereich liegt, und wobei der Neigungswinkel der zweiten Flankenschenkel der Strukturelemente der ersten Schar in dem zweiten Teilbereich (23) in dem zweiten bzw. dem ersten Neigungswinkelbereich liegt.

5. Transparente Abdeckung (2; 100; 200; 300a-c; 400; 400'; 800; 900) für eine Leuchte, wobei die transparente Abdeckung auf einer Grundfläche zumindest einen Oberflächenbereich mit einer Oberflächenstruktur aufweist, welche durch zumindest eine erste Schar von jeweils einer Basislinie (691; 791) folgenden Strukturelementen (120-122; 220-222; 301a-c, 309a-c; 411-413; 411'-414', 421'-423'; 510a-540a; 510b-530b; 690; 710, 720, 790) definiert ist, wobei jedes Strukturelement der ersten Schar in einem Querschnitt senkrecht zu der Basislinie (691; 791) einen ersten Flankenschenkel (150; 250; 350a; 350c, 950a-f) aufweist, welcher einen Neigungswinkel mit der Grundfläche einschließt,
wobei der Oberflächenbereich zumindest einen ersten Teilbereich (21), einen dritten Teilbereich (25) sowie einen zwischen dem ersten und dritten Teilbereich (21, 25) befindlichen zweiten Teilbereich (23) aufweist, wobei der Neigungswinkel der ersten Flankenschenkel der Strukturelemente der ersten Schar in dem ersten Teilbereich (21) und in dem dritten Teilbereich (25) in einem ersten Neigungswinkelbereich liegt, und wobei der Neigungswinkel der ersten Flankenschenkel der Strukturelemente der ersten Schar in dem zweiten Teilbereich (23) in einem zweiten Neigungswinkelbereich liegt, wobei der erste und der zweite Neigungswinkelbereich voneinander getrennt sind, und wobei der erste und der zweite Teilbereich (21, 23) benachbart sind, und wobei der zweite und der dritte Teilbereich (23, 25) benachbart sind, **dadurch gekennzeichnet, dass** der Neigungswinkel der ersten und/oder zweiten Flankenschenkel zumindest einiger Strukturelemente (690; 790) der ersten Schar entlang der Basislinie (691; 791) variiert.

6. Transparente Abdeckung (2) nach einem der vorherigen Ansprüche, wobei der Neigungswinkel der ersten und/oder zweiten Flankenschenkel der Strukturelemente der ersten Schar in dem ersten, zweiten und/oder dritten Teilbereich (21, 23, 25) konstant ist.

7. Transparente Abdeckung (2) nach einem der Ansprüche 1 bis 4, wobei der erste und/oder der zweite Übergangsbereich (22, 24) mehrere erste Zonen (61, 63, 65, 67, 69, 71), in welchen der Neigungswinkel der ersten und/oder zweiten Flankenschenkel der Strukturelemente der ersten Schar in dem ersten Neigungswinkelbereich liegt, und mehrere zweite Zonen (60, 62, 64, 66, 68, 70), in welchen der Neigungswinkel der ersten und/oder zweiten Flankenschenkel der Strukturelemente der ersten Schar in dem zweiten Neigungswinkelbereich liegt, umfasst,
wobei insbesondere eine der zweiten Zonen (70), die näher an dem zweiten Teilbereich (23) angeordnet ist, breiter ist als zumindest eine, bevorzugt jede der zweiten Zonen (60, 62, 64, 66, 68), die von dem zweiten Teilbereich (23) weiter entfernt angeordnet sind.

8. Transparente Abdeckung (2; 100; 200; 400; 400'; 800; 900) nach einem der vorherigen Ansprüche, wobei die Oberflächenstruktur ferner zumindest eine zweite Schar von Strukturelementen (110; 210; 420, 430; 610; 431', 432') aufweist, wobei die Strukturelemente der zweiten Schar insbesondere jeweils einer Basislinie folgen und die Basislinien der Strukturelemente der zweiten Schar bevorzugt parallel zueinander verlaufen, wobei besonders bevorzugt die Basislinien der Strukturelemente (110; 210; 420, 430; 610; 431', 432') der zweiten Schar einen Winkel mit den Basislinien der Strukturelemente (120-122; 220-222; 301a-c, 309a-c; 411-413; 411'-414', 421'-423'; 510a-540a; 510b-530b; 690; 710, 720, 790) der ersten Schar einschließen.

9. Transparente Abdeckung nach einem der vorherigen Ansprüche, wobei der Oberflächenbereich darüber hinaus eine alternierende Abfolge weiterer Teilbereiche, in welchen der Neigungswinkel der ersten und/oder zweiten Flankenschenkel der Strukturelemente der ersten Schar in dem ersten Neigungswinkelbereich liegt, und weiterer Teilbereiche, in welchen der Neigungswinkel der ersten und/oder zweiten Flankenschenkel der Strukturelemente der ersten Schar in dem zweiten Neigungswinkelbereich liegt, umfasst,
wobei aufeinander folgende weitere Teilbereiche benachbart sind oder durch einen, Strukturelemente der ersten Schar aufweisenden Übergangsbereich verbunden sind.

10. Leuchte mit einer transparenten Abdeckung (2; 100; 200; 300a-c; 400; 400'; 800; 900) gemäß einem der vorherigen Ansprüche und zumindest einem Leuchtmittel (1) oder Aufnahmemittel für ein Leuchtmittel.

11. Leuchte nach Anspruch 10, wobei das zumindest eine Leuchtmittel (1) eine Längsachse (11) definiert und die Basislinien der Strukturelemente der ersten Schar parallel zu der Längsachse (11) des Leuchtmittels (1) verlaufen.

12. Leuchte nach Anspruch 10 oder 11, wobei der zweite Teilbereich (23) des Oberflächenbereichs der transparenten Abdeckung (2) näher an dem zumindest einen Leuchtmittel (1) angeordnet ist als der erste und/oder der dritte Teilbereich (21, 25).

13. Leuchte nach einem der Ansprüche 10, 11 oder 12, wobei sich der erste, zweite und/oder dritte Teilbereich (21, 23, 25) entlang einer Längsachse erstreckt, welche insbesondere parallel zu der Längsachse (11) des zumindest einen Leuchtmittels (1) verläuft.

## Claims

1. Transparent cover (2; 100; 200; 300a-c; 400, 400'; 800; 900) for a light, wherein the transparent cover comprises, on a base surface, at least one surface region with a surface structure which is defined by at least a first block of structure elements (120-122; 220-222; 301a-c, 309a-c; 411-413; 411'-414', 421'-423'; 510a' 510b-530b; 690; 710, 720, 790), in each case following a base line (691; 791), wherein each structure element of the first block comprises a first flank limb (150; 250; 350a; 350c, 950a-f) in a cross-section perpendicular to the base line (691; 791), which encloses an inclination angle with the base surface,
wherein the surface region comprises at least a first part region (21), a third part region (25), and a second part region (23) located between the first and third part regions (21, 25), wherein the inclination angle of the first flank limb of the structure elements of the first block in the first part region (21) and in the third part region (25) lies in a first inclination angle range, and wherein the inclination angle of the first flank limb of the structure elements in the second part region (23) lie in a second inclination angle range, wherein the first and the second inclination angle ranges are separated from one another, wherein the first and the second part regions (21, 23) are connected by a first transition region (22) comprising structure elements of the first block, and the second and third part regions (23, 25) are connected by a second transition region (24) comprising structure elements of the first block, **characterized in that** the inclination angle of the first and second flank limbs of the structure elements of the first block alternates in the first and second transition regions (22, 24) at least in segments between a value from the first inclination angle range and a value from the second inclination angle range.

2. Transparent cover (2; 100; 200; 300a-c; 400; 400'; 800; 900) according to claim 1, wherein at least some structure elements, in particular every structure element, of the first block further comprise, in the cross-section perpendicular to the base line, a second flank limb (150', 250'; 350a'; 350c'; 950a-f'), wherein the first and the second flank limbs enclose a flank angle (α, α', β), wherein the flank angle (α, α', β) and/ or an inclination of a bisector (370c; 970d) of the flank angle (α, α', β) in relation to a surface normal of the base surface is different in the first and third part region (21) and in the second part region (23).

3. Transparent cover (2; 100; 200; 300a-c; 400; 400'; 800; 900) according to claim 2, wherein the flank angle (α, α', β) in the first part region (21) and in the third part region (25) lies in a first flank angle range, and wherein the (α, α', β) in the second part region (23) lies in a second flank angle range, wherein the first and the second flank angle ranges are separated from one another.

4. Transparent cover (2; 100; 200; 300a-c; 400; 400'; 800; 900) according to claim 2 or 3, wherein the second flank limb (150'; 250'; 350a'; 350c'; 950a'-f') encloses an inclination angle with the base surface, wherein the inclination angle of the second flank limb of the structure elements of the first block in the first part region (21) and in the third part region (25) lie in the first or the second inclination angle range, and wherein the inclination angle of the second flank limb of the structure elements of the first block in the second part region (23) lies in the second or first inclination angle range respectively.

5. Transparent cover (2; 100; 200; 300a-c; 400; 400'; 800; 900) for a light, wherein the transparent cover comprises, on a base surface, at least one surface region with a surface structure which is defined by at least one first block of structure elements (120-122; 220-222; 301a-c, 309a-c; 411-413; 411'-414', 421'-423'; 510a' 510b-530b; 690; 710, 720, 790), in each case following a base line (691; 791), wherein each structure element of the first block comprises a first flank limb (150; 250; 350a; 350c, 950a-f) in a cross-section perpendicular to the base line (691; 791), which encloses an inclination angle with the base surface,
wherein the surface region comprises at least a first part region (21), a third part region (25), and a second part region (23) located between the first and third part regions (21, 25), wherein the inclination angle of the first flank limb of the structure elements of the first block in the first part region (21) and in the third part region (25) lies in a first inclination angle range, and wherein the inclination angle of the first flank limb of the structure elements of the first block in the second part region (23) lies in a second inclination angle range, wherein the first and second inclination angle ranges are separated from one another, and wherein the first and second part regions (21, 23) are adjacent, and wherein the second and third part regions (23, 25) are adjacent, **characterized in that** the inclination angle of the first and/or second flange limbs of at least some structure elements (690; 790) of the first block varies along the base line (691; 791).

6. Transparent cover (2) according to one of the preceding claims, wherein the inclination angle of the first and/or second flank limbs of the structure elements of the first block is constant in the first, second, and/or third part regions (21, 23, 25).

7. Transparent cover (2) according to one of claims 1 to 4, wherein the first and/or the second transition regions (22, 24) comprise a plurality of first zones (61, 63, 65, 67, 69, 71), in which the inclination angle of the first and/or second flank limb of the structure elements of the first block lies in the first inclination angle range, and a plurality of second zones (60, 62, 64, 66, 68, 70), in which the inclination angle of the first and/or second flank limbs of the structure elements of the first block lies in the second inclination angle range, wherein, in particular, one of the second zones (70), which is arranged closer to the second part region (23), is wider than at least one, and preferably each, of the second zones (60, 62, 64, 66, 68) which are arranged further away from the second part region (23).

8. Transparent cover (2; 100; 200; 400; 40'; 800; 900) according to one of the preceding claims, wherein the surface structure further comprises at least one second block of structure elements (110; 210; 420, 430; 610; 431', 432'), wherein the structure elements of the second block in particular in each case follow a base line, and the base lines of the structure elements of the second block preferably run parallel to one another, wherein, for particular preference, the base lines of the structure elements (110; 210; 420, 430; 610; 431', 432') of the second block enclose an angle with the base lines of the structure elements (120-122; 220-222; 301a-c, 309a-c; 411-413; 411'-414', 421'-423'; 510a-540a; 510b-530b; 690; 710, 720, 790) of the first block.

9. Transparent cover according to one of the preceding claims, wherein the surface region further comprises an alternating sequence of further part regions, in which the inclination angle of the first and/or second flank limbs of the structure elements of the first block lies in the first inclination angle range, and further part regions, in which the inclination angle of the first and/or second flank limbs of the structure elements of the first block lies in the second inclination angle range,
wherein further part regions, following one another, are adjacent or are connected by a transition region comprising structure elements of the first block.

10. Light with a transparent cover (2; 100; 200; 300a-c; 400; 400'; 800; 900) according to one of the preceding claims, and with at least one lighting means (1) or accommodation means for a lighting means.

11. Light according to claim 10, wherein the at least one lighting means (1) defines a longitudinal axis (11), and the base lines of the structure elements of the first block run parallel to the longitudinal axis (11) of the lighting means (1).

12. Light according to claim 10 or 11, wherein the second part region (23) of the surface region of the transparent cover (2) is arranged closer to the at least one lighting means (1) than the first and/or third part region (21, 25).

13. Light according to any one of claims 10, 11 or 12, wherein the first, second, and/or third part regions (21, 23, 25) extend along a longitudinal axis, which runs in particular parallel to the longitudinal axis (11) of the at least one lighting means (1).

## Revendications

1. Couvercle transparent (2 ; 100 ; 200 ; 300a-c ; 400 ; 400' ; 800 ; 900) pour un luminaire, le couvercle transparent comprenant, sur une surface de base, au moins une zone de surface avec une structure de surface, qui est définie par au moins un premier groupe constitué d'éléments structurels (120-122 ; 220-222 ; 301a-c, 309a-c ; 411-413 ; 411'-414', 421'-423' ; 510a-540a ; 510b-530b ; 690 ; 710, 720, 790) suivant une ligne de base (691 ; 791), chaque élément structurel du premier groupe présentant, en coupe transversale perpendiculaire à la ligne de base (691 ; 791), un premier flanc (150; 250; 350a; 350c, 950a-f) qui forme un angle d'inclinaison avec la surface de base,
la zone de surface comprenant au moins une première zone partielle (21), une troisième zone partielle (25) ainsi qu'une deuxième zone partielle (23) se trouvant entre la première et la deuxième zone partielle (21, 25), l'angle d'inclinaison du premier flanc des éléments structurels du premier groupe se trouvant, dans la première zone partielle (21) et dans la troisième zone partielle (25), dans un premier intervalle d'angle d'inclinaison et l'angle d'inclinaison du premier flanc des éléments structurels du premier groupe se trouvant, dans la deuxième zone partielle (23) dans un deuxième intervalle d'angle d'inclinaison, le premier et le deuxième intervalle d'angle d'inclinaison étant distincts l'un de l'autre,
la première et la deuxième zone partielle (21, 23) étant reliées par une première zone de transition (22) comprenant des éléments structurels du premier groupe et la deuxième et la troisième zone partielle (23, 25) étant reliées par une deuxième zone de transition (24) comprenant des éléments structurels du premier groupe,
**caractérisé en ce que** l'angle d'inclinaison du premier et deuxième flanc des éléments structurels du premier groupe alterne, dans la première et la deuxième zone de transition (22, 24) au moins partiellement entre une valeur provenant du premier intervalle d'angle d'inclinaison et une valeur provenant du deuxième intervalle d'angle d'inclinaison.

2. Couvercle transparent (2 ; 100 ; 200 ; 300a-c ; 400 ; 400' ; 800 ; 900) selon la revendication 1, au moins certains, plus particulièrement chaque élément structurel du premier groupe comprend, en coupe transversale perpendiculaire à la ligne de base, en outre un deuxième flanc (150' ; 250' ; 350a' ; 350c' ; 950a'-f'), le premier et le deuxième flanc formant un angle de flanc (α, α', β), l'angle de flanc (α, α', β) et/ou une inclinaison d'une bissectrice (370c ; 970d) par rapport à l'angle de flanc (α, α', β) par rapport à la normale de la surface de base étant différents dans la première et la troisième zone partielle (21) et dans la deuxième zone partielle (23).

3. Couvercle transparent (2 ; 100 ; 200 ; 300a-c ; 400 ; 400' ; 800 ; 900) selon la revendication 2, l'angle de flanc (α, α', β) se trouvant, dans la première zone partielle (21) et dans la troisième zone partielle (25), dans un premier intervalle d'angle de flanc et l'angle de flanc (α, α', P) se trouvant, dans la deuxième zone partielle (23), dans un deuxième intervalle d'angle de flanc, le premier et le deuxième intervalle d'angle de flanc étant distincts.

4. Couvercle transparent (2 ; 100 ; 200 ; 300a-c ; 400 ; 400' ; 800 ; 900) selon la revendication 2 ou 3, le deuxième flanc (150' ; 250' ; 350a' ; 350c' ; 950a'-f') formant avec la surface de base un angle d'inclinaison, l'angle d'inclinaison du deuxième flanc des éléments structurels du premier groupe se trouvant, dans la première zone partielle (21) et dans la troisième zone partielle (25), dans le premier ou le deuxième intervalle d'angle d'inclinaison, et l'angle d'inclinaison du deuxième flanc des éléments structurels du premier groupe se trouvant, dans la deuxième zone partielle (23), dans le deuxième ou dans le premier intervalle d'angle d'inclinaison.

5. Couvercle transparent (2 ; 100 ; 200 ; 300a-c ; 400 ; 400' ; 800 ; 900) pour un luminaire, ce couvercle transparent comprenant, sur une surface de base, au moins une zone de surface avec une structure de surface, qui est définie par au moins un premier groupe d'éléments structurels (120-122 ; 220-222 ; 309a-c ; 411-413 ; 411'-414', 421'-423' ; 510a-540a ; 510b-530b ; 690 ; 710, 720, 790) suivant une ligne de base (691 ; 791), chaque élément structurel du premier groupe comprenant, en coupe transversale perpendiculaire à la ligne de base (691 ; 791), un premier flanc (150 ; 250 ; 350a ; 350c, 950a-f), qui forme avec la surface de base un angle d'inclinaison, la zone de surface comprenant au moins une première zone partielle (21), une troisième zone partielle (25) ainsi qu'une deuxième zone partielle (23) se trouvant entre la première et la troisième zone partielle (21, 25), l'angle d'inclinaison du premier flanc des éléments structurels du premier groupe se trouvant, dans la première zone partielle (21) et dans la troisième zone partielle (25), dans un premier intervalle d'angle d'inclinaison et l'angle d'inclinaison du premier flanc des éléments structurels du premier groupe se trouvant, dans la deuxième zone partielle (23), dans un deuxième intervalle d'angle d'inclinaison, le premier et le deuxième intervalle d'angle d'inclinaison étant distincts et la première et la deuxième zone partielle (21, 23) étant adjacentes et la deuxième et la troisième zone partielle (23, 25) étant adjacentes,
**caractérisé en ce que** l'angle d'inclinaison du premier et/ou du deuxième flanc d'au moins certains éléments structurels (690 ; 790) du premier groupe varie le long de la ligne de base (691 ; 791).

6. Couvercle transparent (2) selon l'une des revendications précédentes, l'angle d'inclinaison du premier et/ou du deuxième flanc des éléments structurels du premier groupe étant constant dans la première, la deuxième et/ou la troisième zone partielle (21, 23, 25).

7. Couvercle transparent (2) selon l'une des revendications 1 à 4, la première et/ou la deuxième zone de transition (22, 24) comprend plusieurs premières zones (61,63, 65, 67, 69, 71), dans lesquelles l'angle d'inclinaison du premier et/ou deuxième flanc des éléments structurels du premier groupe se trouve dans le premier intervalle d'angle d'inclinaison et plusieurs deuxièmes zones (60, 62, 64, 66, 68, 70), dans lesquelles l'angle d'inclinaison du premier et/ou deuxième flanc des éléments structurels du premier groupe se trouve dans le deuxième intervalle d'angle d'inclinaison,
plus particulièrement une des deuxièmes zones (70), qui est plus proche de la deuxième zone partielle (23), étant plus large qu'au moins une, de préférence que chacun des deuxièmes zones (60, 62, 64, 66, 68) qui sont plus éloignées de la deuxième zone partielle (23).

8. Couvercle transparent (2 ; 100 ; 200 ; 300a-c ; 400 ; 400' ; 800 ; 900) selon l'une des revendications précédentes, la structure de surface comprenant en outre au moins un deuxième groupe d'éléments structurels (110 ; 210 ; 420, 430 ; 610 ; 431' ; 432'), les éléments structurels du deuxième groupe suivant plus particulièrement chacun une ligne de base et les lignes de base des éléments structurels du deuxième étant de préférence parallèles entre elles, plus particulièrement, de préférence, les lignes de base des éléments structurels (110 ; 210 ; 420, 430 ; 610 ; 431' ; 432') du deuxième groupe formant un angle avec les lignes de base des éléments structurels (120-122; 220-222; 309a-c ; 411-413; 411'-414', 421'-423'; 510a-540a; 510b-530b; 690; 710, 720, 790) du premier groupe.

9. Couvercle transparent selon l'une des revendications précédentes, la zone de surface comprenant en outre une suite alternée de zones partielles supplémentaires, dans lesquelles l'angle d'inclinaison du premier et/ou du deuxième flanc des éléments structurels du premier groupe se trouve dans le premier intervalle d'angle d'inclinaison et des zones partielles supplémentaires, dans lesquelles l'angle d'inclinaison du premier et/ou du deuxième flanc des éléments structurels du premier groupe se trouve dans le deuxième intervalle d'angle d'inclinaison,
les zones partielles supplémentaires successives étant adjacentes ou étant reliées par une zone de transition comprenant des éléments structurels du premier groupe.

10. Luminaire avec un couvercle transparent (2 ; 100 ; 200 ; 300a-c ; 400 ; 400' ; 800 ; 900) selon l'une des revendications précédentes et au moins un moyen d'éclairage (1) ou un moyen de logement pour un moyen d'éclairage.

11. Luminaire selon la revendication 10, l'au moins un moyen d'éclairage (1) définissant un axe longitudinal (11) et les lignes de base des éléments structurels du premier groupe étant parallèles à l'axe longitudinal (11) du moyen d'éclairage (1).

12. Luminaire selon la revendication 10 ou 11, la deuxième zone partielle (23) de la zone de surface du couvercle transparent (2) étant plus proche de l'au moins un moyen d'éclairage (1) que la première et/ou la troisième zone partielle (21, 25).

13. Luminaire selon l'une des revendications 10, 11 ou 12, la première, la deuxième et/ou la troisième zone partielle (21, 23, 25) s'étendant le long d'un axe longitudinal qui est plus particulièrement parallèle à l'axe longitudinal (11) de l'au moins un moyen d'éclairage (1).
